# EUROPEAN PATENT SPECIFICATION

(11) **EP 4 407 844 B1**
(45) Date of publication and mention of the grant of the patent: **14.01.2026**
(21) Application number: 22953632.1
(22) Date of filing: 05.08.2022
(51) Int. Cl.: H02K 3/28, H02K 3/12, H02K 3/04, H02K 15/064

(54) **FLAT WIRE ELECTRIC MOTOR AND STATOR THEREOF**
FLACHDRAHT-ELEKTROMOTOR UND STATOR DAFÜR
MOTEUR ÉLECTRIQUE À FIL PLAT ET SON STATOR

(43) Date of publication of application: 31.07.2024
(73) Proprietor: Contemporary Amperex Intelligence Technology (Shanghai) Limited, Shanghai 201306 (CN)
(72) Inventor: WU, Kai, Shanghai 200120 (CN)
(74) Representative: Rowlands, Stuart Michael
(86) International application number: PCT/CN2022/110515
(87) International publication number: WO 2024/026824

(56) References cited:
- WO-A1-2021/210704
- CN-A- 111 555 505
- CN-A- 111 555 505
- CN-A- 111 884 382
- CN-A- 113 783 334
- CN-A- 113 783 334
- CN-B- 112 583 166
- DE-A1- 102019 218 115
- JP-A- 2015 073 379
- JP-A- 2015 073 379

## Description

### FIELD

The present disclosure relates to the field of power units, and in particular, to a flat wire motor and a stator thereof.

CN111555505A discloses a motor stator and a motor, wherein the stator core is provided with a plurality of grooves which are formed on the radial inner surface of the stator core and are spaced at preset groove intervals along the circumferential direction of the stator core; the stator winding is arranged on the stator iron core; stator winding is the three-phase, and each phase stator winding is along stator core circumference parallel connection in proper order, and stator winding includes: the first coil group, the at least one second coil group and the third coil group are sequentially sleeved along the radial direction of the stator iron core; the winding structure adopts a completely symmetrical structure on a magnetic circuit, so that the problem of circulating current generated by an asymmetrical structure is solved; the interphase busbars are omitted, direct connection between the phases is achieved, the branch and the neutral point of each phase winding are arranged on any layer of any groove, the complexity of the manufacturing process is reduced, the production cost is reduced, the material cost is reduced, and the processing efficiency is improved.

DE102019218115A1 discloses a machine component for an electrical machine, comprising a base body which has a plurality of slots and is provided with a multi-phase winding, wherein each of the plurality of slots is occupied by only a single phase of the multi-phase winding and the multi-phase winding is a plug-in winding in which bow-shaped conductors are plugged into two slots of the plurality of slots.

### BACKGROUND

The flat wire motor has the advantages of a high copper wire filling rate, facilitating the heat dissipation of the motor winding, improving the voltage endurance capability of the winding, reducing the length of an end of the winding, etc. It may then improve the torque density and power density of the motor. Therefore, the flat wire motor has become an important measure to promote the lightweight of vehicles, increase the endurance mileage of electric vehicles, improve the space utilization of vehicles, and reduce the cost of powertrain.

How to simplify the wire-embedded structure of the motor and reduce the height of a winding end of the motor is an important research direction in the motor field.

### SUMMARY

The present disclosure provides a flat wire motor and a stator thereof, which can simplify the wire embedded process and reduce the height of a stator winding end.

The present disclosure provides a stator of a flat wire motor according to claim 1.

In the above technical solution, the first coil is a long-pitch coil, and the second coil is a short-pitch coil. The combination of the long-pitch coil and the short-pitch coil may form a concentric embedded arrangement at the wire insertion end of the stator winding. The second connection portion of the second coil may pass between the first connection portion and the stator iron core, thereby reducing a space additionally occupied in the axial direction of the stator iron core and reducing the height of the coil elements in the axial direction. The stator winding includes coil elements of the same type, which can reduce the wire types of the coils, simplify the wire embedding process, and reduce the height of the end of the stator winding.

In some embodiments, the first coil further includes a first extension portion and a second extension portion, the first extension portion extends from an end of the first plug portion away from the first connection portion, and the second extension portion extends from an end of the second plug portion away from the first connection portion. The second coil further includes a third extension portion and a fourth extension portion, the third extension portion extends from an end of the third plug portion away from the second connection portion, and the fourth extension portion extends from an end of the fourth plug portion away from the second connection portion. The first extension portion is bent towards the fourth plug portion with respect to the first plug portion, and the fourth extension portion is bent towards the first plug portion with respect to the fourth plug portion and connected to the first extension portion.

In the above technical solution, the first extension portion and the fourth extension portion are bent relatively, such that the dimension requirements for the first extension portion and the fourth extension portion can be reduced, and the height of the stator winding at the welded end can be decreased.

In some embodiments, the number of the plurality of winding slots is 12·M, where M is a positive integer. A span between the first plug portion and the second plug portion of the first coil is seven winding slots of the plurality of winding slots, and a span between the third plug portion and the fourth plug portion of the second coil is five winding slots of the plurality of winding slots.

The above technical solution can expand the use range of winding design and adapt to different voltage and power ranges. The span of the first coil and the span of the second coil are adapted to the number of the winding slots, such that the plurality of coil elements may be embedded in the winding slots.

According to the invention, each of the first plug portion, the third plug portion, the fourth plug portion, and the second plug portion serves as a flat wire conductor in a corresponding one of the plurality of winding slots. N flat wire conductor layers are arranged in each of the plurality of winding slots, and n is a positive even number. The n flat wire conductor layers are denoted as an L₁ flat wire conductor layer, ... an Lᵢ flat wire conductor layer, ... and an Lₙ flat wire conductor layer in a direction in which a bottom of the winding slot is directed towards an opening of the winding slot, where 1 ≤ i ≤ n.

According to the invention, the stator winding includes a plurality of phase windings, each of the plurality of phase windings includes at least one branch, and the at least one branch includes the plurality of coil elements. In the at least one branch, the flat wire conductors of at least two coil elements of the plurality of coil elements connected to one another are arranged in a same flat wire conductor layer.

In the above technical solution, at least two coil elements may be welded with a full pitch without cross-layer welding, thereby simplifying the welding process. The flat wire conductors that are connected in the same layer can also balance slot potentials of the branches and reduce the current-circulation loss among the branches.

In some embodiments, the L₁ flat wire conductor layers of the at least two coil elements are connected in the at least one branch. The L₁ flat wire conductor layers of the two coil elements are located close to a radial outer end of the stator iron core to facilitate welding.

In some embodiments, the Lₙ flat wire conductor layers of the at least two coil elements are connected in the at least one branch. The Lₙ flat wire conductor layers of the two coil elements are located close to the radial inner end of the stator iron core to facilitate welding.

In some embodiments, the stator winding includes a plurality of phase windings, each of the plurality of phase windings includes at least one branch, and the at least one branch includes the plurality of coil elements. Each of the at least one branch is provided with a first lead and a second lead respectively at two ends of the branch, the first lead and the second lead are connected to different flat wire conductors, and the flat wire conductor connected to the first lead and the flat wire conductor connected to the second lead are arranged in different winding slots of the plurality of winding slots.

In the above technical solution, the flat wire conductor connected to the first lead and the flat wire conductor connected to the second lead are arranged in different winding slots, to increase the spacing between the first lead and the second lead and reduce the risk of a short circuit due to the contact of the first lead and the second lead.

In some embodiments, the flat wire conductor connected to the first lead and the flat wire conductor connected to the second lead are arranged in a same flat wire conductor layer.

The above technical solution facilitates arrangement of busbars and facilitates the connection of the first lead and the second lead to an external circuit.

In some embodiments, each of the plurality of phase windings includes a plurality of branches, and two of the plurality of branches are a first branch and a second branch. A span between the flat wire conductor connected to the first lead of the first branch and the flat wire conductor connected to the first lead of the second branch is smaller than or equal to a pole pitch.

The above technical solution can reduce the spacing between the first leads of the two branches, facilitate the connection of the first leads of the two branches, and facilitate the arrangement of the busbars and the implementation of the winding process.

In some embodiments, the flat wire conductor connected to the first lead of the first branch and the flat wire conductor connected to the first lead of the second branch are arranged in a same winding slot of the plurality of winding slots.

According to the above technical solution, the first leads of the two branches are leaded out from the same winding slot, thereby further reducing the distance between the first leads of the two branches, facilitating the connection of the first leads of the two branches, and facilitating the arrangement of bus bars and the implementation of the winding process.

In some embodiments, all of the first leads of the plurality of phase windings are connected to the flat wire conductors in the different winding slots.

The above technical solution can increase the spacings among the leads to reduce the phase-to-phase voltage stress.

In some embodiments, the stator winding includes a plurality of phase windings, each of the plurality of phase windings includes at least one branch, and the at least one branch includes the plurality of coil elements. Each of the at least one branch includes k flat wire conductor layers, and k is a positive integer greater than 1. The k flat wire conductor layers are denoted as an A₁ flat wire conductor layer, an A₂ flat wire conductor layer, ... an Aₖ₋₁ flat wire conductor layer, and an Aₖ flat wire conductor layer in a current flow direction. Two adjacent flat wire conductors of the branch that are located in the same winding slot are respectively denoted as an Aⱼ flat wire conductor layer and an A₁ flat wire conductor layer, 1 ≤ j < I ≤ k, where I-j ≤ k/2.

The greater a difference between the serial numbers of the flat wire conductors is, the greater a pressure difference between the two flat wire conductors is. If a difference between serial numbers of two adjacent flat wire conductors located in the same winding slot is too great, a voltage stress between the flat wire conductors in the winding slot may be too high. The above technical solution can satisfy I-j ≤ k/2 to reduce the voltage stress between the flat wire conductors in the winding slot.

In some embodiments, the stator winding includes a plurality of phase windings, each of the plurality of phase windings includes at least one branch, and the at least one branch includes the plurality of coil elements. The phase winding includes 2P pole-phase groups, and P is a positive integer. The phase winding includes a plurality of branches, and coil elements of at least one of the plurality of branches are distributed in all of the 2P pole-phase groups.

The above technical solution can reduce branch potential imbalance caused by rotor eccentricity.

In some embodiments, the stator winding includes a plurality of phase windings, each of the plurality of phase windings includes at least one branch, and the at least one branch includes the plurality of coil elements. The phase winding includes 2P pole-phase groups, and P is a positive integer. The phase winding includes a plurality of branches, and coil elements of each of the plurality of branches are distributed in some of the 2P pole-phase groups.

In a second aspect, the embodiments of the present disclosure provide a flat wire motor including a rotor and the stator according to any one of the embodiments of the first aspect. The rotor is disposed in a space enclosed by the inner wall of the stator iron core.

### BRIEF DESCRIPTION OF DRAWINGS

To illustrate the technical solutions of the embodiments of the present disclosure more clearly, a brief description will be given below of the accompanying drawings, which are required to be used in the description of the embodiments. It is obvious that the drawings in the description below are only some embodiments of the present disclosure, and it would be obvious for those skilled in the art to obtain other drawings based on the drawings without involving any inventive effort.
FIG. 1 is a structural schematic view of a stator of a flat wire motor according to some embodiments of the present disclosure.
FIG. 2 is a structural schematic view of the stator of FIG. 1 viewed at another angle.
FIG. 3 is a sectional schematic view of the stator shown in FIG. 1.
FIG. 4 is an enlarged schematic view of a section A in FIG. 3.
FIG. 5 is a structural schematic view of a coil element of a stator according to some embodiments of the present disclosure.
FIG. 6 is a schematic partial view of a stator according to some embodiments of the present disclosure.
FIG. 7 is a schematic view of a branch of a stator according to some embodiments of the present disclosure.
FIG. 8 is a schematic view of a phase winding of a stator according to some embodiments of the present disclosure.
FIG. 9 is a schematic view of a phase winding of a stator according to further embodiments of the present disclosure.
FIG. 10 is a schematic view of a phase winding of a stator according to yet further embodiments of the present disclosure.
FIG. 11 is a schematic view of a phase winding of a stator according to still further embodiments of the present disclosure.
FIG. 12 is a schematic view of a phase winding of a stator according to other embodiments of the present disclosure.
FIG. 13 is a schematic view of a phase winding of a stator according to further embodiments of the present disclosure.
FIG. 14 is a schematic view of a phase winding of a stator according to yet further embodiments of the present disclosure.
FIG. 15 is a schematic view of a phase winding of a stator according to still further embodiments of the present disclosure.
FIG. 16 is a schematic view of a stator winding of a stator according to some embodiments of the present disclosure.
FIG. 17 is a schematic view of a stator winding of a stator according to further embodiments of the present disclosure.
FIG. 18 is a schematic view of connections among phase windings of a stator winding of a stator according to some embodiments of the present disclosure.
FIG. 19 is a schematic view of connections among phase windings of a stator winding of a stator according to further embodiments of the present disclosure.
FIG. 20 is a schematic view of connections among phase windings of a stator winding of a stator according to yet further embodiments of the present disclosure.
FIG. 21 is a schematic view of connections among phase windings of a stator winding of a stator according to still further embodiments of the present disclosure.

In the drawings, the drawings are not necessarily drawn to scale.

### DESCRIPTION OF EMBODIMENTS

To make the purpose, technical solution, and advantages of the embodiments of the present disclosure clearer, the following will provide a clear description of the technical solution in combination with the accompanying drawings in embodiments of the present disclosure.

Unless otherwise defined, all technical and scientific terms used herein have the same meaning as commonly understood by those skilled in the art of the present disclosure. Terms in a specification of the present disclosure herein are only used to describe specific embodiments, and are not intended to limit the present disclosure. The terms "including," "having," and any variation thereof in the description and claims of the present disclosure and in the preceding description of the figures are intended to cover non-exclusive inclusion. In the specification and claims of the present disclosure or in the above-mentioned drawings, the terms "first," "second," and the like are used to distinguish different objects, rather than describing a particular order.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments.

In the description of the present disclosure, it should be noted that, unless expressly stated or limited otherwise, the terms "mounted," "connected," "coupled," and "attached" are to be interpreted broadly, and may, for example, be fixedly connected, detachably connected, or integrally connected, may be directly connected or indirectly connected through an intermediate medium, and may be communication between two elements. The specific meaning of the above terms in the present disclosure can be understood by those skilled in the art.

In the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the symbol.

In the embodiments of the present disclosure, the same reference numerals denote the same components, and a detailed description of the same components is omitted in different embodiments for the sake of brevity. It is to be understood that the thickness, length, width, and other dimensions of the various components in the embodiments of the present disclosure illustrated in the figures, as well as the overall thickness, length, width, and other dimensions of the integrated device, are illustrative only and should not be construed to limit the present disclosure in any way.

The term "a plurality of" as used herein refers to two or more (including two).

At present, in a drive motor of a new energy vehicle, a stator of the motor may be classified into a circular wire conductor and a flat wire conductor based on a sectional shape of a coil forming a stator winding. A motor having a flat wire conductor is called a flat wire motor. The flat wire motor can effectively improve the slot space-factor, the power density, and the torque density.

The inventors have observed that as the number of flat wire conductors in the winding slots increases, the number and the wire type of the coils also increase, which results in interleaved wire-embedded directions of the coils, and thus increasing the difficulty of wire embedding. At the wire insertion end of the stator winding, the coils are laminated with one another, which causes the height of the winding end to be too high and the space at the winding end to be too small. The risk of insulation failure may occur in long-term operation.

Given this, embodiments of the present disclosure provide a flat wire motor and a stator thereof, which can reduce wire types of the coils, simplify the wire embedding process, and reduce a height of a stator winding end by adjusting the connection manner of the coils.

For ease of understanding, the terms used in the present disclosure are defined as follows.

A stator refers to a stationary part of the motor, which acts to generate a rotating magnetic field.

A rotor refers to a rotary component of the motor, which acts to realize conversion between electric energy and mechanical energy.

A span refers to a distance over which two sides of the same component of the motor winding span on an armature surface, and is represented by the number of winding slots formed on a stator iron core.

P denotes the number of magnetic pole pairs, which is referred to as the number of pole pairs. Magnetic poles formed by energization of the motor windings appear as pairs of N and S poles. The total number of the poles is 2P.

A pole pitch refers to a distance occupied by each of the poles of the motor along a circumferential surface of an air gap. The pole pitch may be represented by the number of the winding slots of the stator iron core. In an embodiment, the pole pitch is Z/2P, and Z is the total number of the winding slots of the stator iron core.

A pole phase group is formed by connecting in series a plurality of coils belonging to an in-phase winding at a pole pitch in an alternating current motor, and is also referred to as a coil group. The current directions and the electromagnetic effects of coils of the pole phase group are the same, and the coils collectively generate a magnetic pole in the phase winding.

A phase winding refers to a set of windings consisting of at least one parallel branch connected in series and in parallel in a prescribed manner.

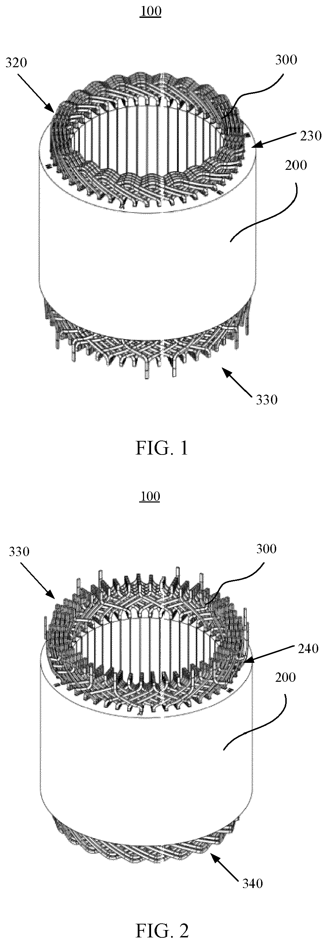

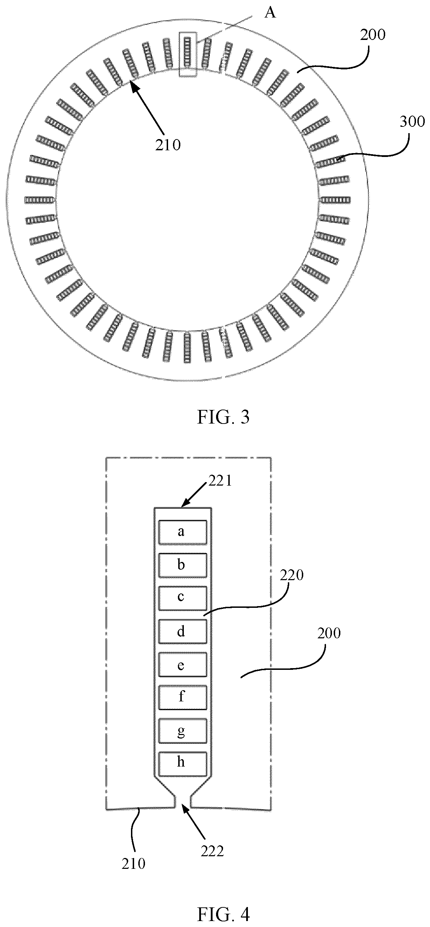

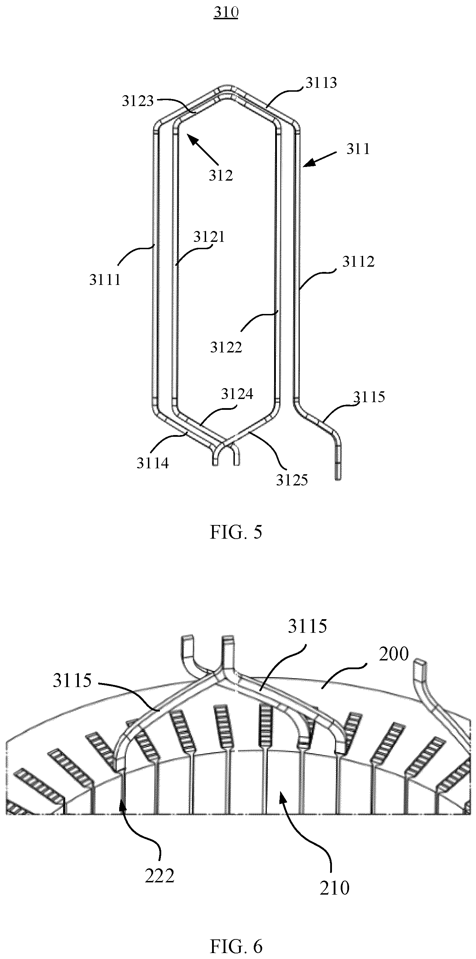

FIG. 1 is a schematic structural view of a stator of a flat wire motor according to some embodiments of the present disclosure. FIG. 2 is a schematic structural view of the stator of FIG. 1 viewed at another angle. FIG. 3 is a schematic sectional view of the stator shown in FIG. 1. FIG. 4 is a schematic enlarged view of a section A in FIG. 3. FIG. 5 is a schematic structural view of a coil element of a stator according to some embodiments of the present disclosure. FIG. 6 is a partial schematic view of a stator according to some embodiments of the present disclosure.

As shown in FIGS. 1 to 6, the invention provides a stator 100 of a flat wire motor. The stator 100 includes a stator iron core 200 and a stator winding 300 provided at the stator iron core 200. The stator iron core 200 has a plurality of winding slots 220 formed in an inner wall 210 thereof, and the plurality of winding slots 220 is arranged along a circumferential direction of the inner wall 210 of the stator iron core 200. The stator winding 300 includes a plurality of coil elements 310, each of which includes a first coil 311 and a second coil 312. The first coil 311 includes a first plug portion 3111, a second plug portion 3112, and a first connection portion 3113 connecting the first plug portion 3111 and the second plug portion 3112. The second coil 312 includes a third plug portion 3121, a fourth plug portion 3122, and a second connection portion 3123 connecting the third plug portion 3121 and the fourth plug portion 3122. The first plug portion 3111, the third plug portion 3121, the fourth plug portion 3122, and the second plug portion 3112 are arranged along the circumferential direction and are respectively inserted in different winding slots 220. The first plug portion 3111 is connected to the fourth plug portion 3122. The second connection portion 3123 is located on a side of the first connection portion 3113 facing towards the stator iron core 200.

The stator iron core 200 has an insertion end 230 and a protruding end 240 in an axial direction thereof. The winding slots 220 may extend from the insertion end 230 to the protruding end 240.

The first coil 311 and the second coil 312 may be hairpin coils. In the axial direction of the stator iron core 200, the stator winding 300 may include a wire insertion end 320 and a welded end 330. The wire insertion end 320 of the stator winding 300 may be located at the insertion end 230 of the stator iron core 200, and the welded end 330 of the stator winding 300 may be located at the protruding end 240 of the stator iron core 200. When winding the coils, the first coil 311 and the second coil 312 may be inserted into the winding slots 220 through the insertion end 230 and extend out of the winding slots 220 through the protruding end 240.

The first connection portion 3113 and the second connection portion 3123 are located on the same side of the stator iron core 200 in the axial direction. In an exemplary embodiment, the first connection portion 3113 and the second connection portion 3123 are both disposed at the wire insertion end 320 of the stator winding 300.

The winding slot 220 accommodating the first plug portion 3111, the winding slot 220 accommodating the third plug portion 3121, the winding slot 220 accommodating the fourth plug portion 3122, and the winding slot 220 accommodating the second plug portion 3112 are arranged in the circumferential direction.

The first coil 311 and the second coil 312 may be connected directly or indirectly through other conductive structures. In an exemplary embodiment, a part of the first coil extending out of the winding slot and a part of the second coil extending out of the winding slot may be connected to connect the first plug portion 3111 and the fourth plug portion 3122. In another exemplary embodiment of the present disclosure, a conductive strip may be provided on a side of the stator iron core, and two ends of the conductive strip are welded to the first plug portion 3111 and the fourth plug portion 3122, respectively, to connect the first plug portion 3111 and the fourth plug portion 3122.

In an embodiment of the present disclosure, the first coil 311 is a long-pitch coil and the second coil 312 is a short-pitch coil. The combination of the long-pitch coil and the short-pitch coil may form a concentric embedded arrangement at the wire insertion end 320 of the stator winding 300. The second connection portion 3123 of the second coil 312 may pass between the first connection portion 3113 and the stator iron core 200, thereby reducing a space additionally occupied in the axial direction of the stator iron core 200 and reducing the height of the coil elements 310 in the axial direction. The stator winding 300 includes coil elements 310 of the same type, which can reduce the wire types of the coils, simplify the wire embedding process, and reduce the height of the end of the stator winding 300.

With this connection manner, the first coil 311 and the second coil 312 constitute a series connection of adjacent coils in a single branch. There are larger distributed capacitances at connection positions where the first coil 311 and the second coil 312 are connected at the wire insertion end 320 and the welded end 330, which is beneficial to absorbing high-frequency voltage impact of a driver, reducing voltage oscillation amplitudes of the first coil 311 and the second coil 312, and improving the insulation reliability.

In some embodiments, the plurality of winding slots 220 is uniformly arranged along the circumference direction of the inner wall 210 of the stator iron core 200. In other words, the plurality of winding slots 220 is arranged at equal intervals in the circumferential direction. In designing the coil, a span of the coil may be determined based on the number of the slots, thereby reducing the wire types of the coils and simplifying the wire embedding process.

In some embodiments, the winding slots 220 extend in the axial direction of the stator iron core 200, and pass through the stator iron core 200 in the axial direction of the stator iron core 200. This embodiment may reduce the bending of the coil during the insertion of the coil into the winding slot 220 and reduce the assembly difficulty.

In some embodiments, the first coil 311 further includes a first extension portion 3114 and a second extension portion 3115, the first extension portion 3114 extends from an end of the first plug portion 3111 away from the first connection portion 3113, and the second extension portion 3115 extends from an end of the second plug portion 3112 away from the first connection portion 3113. The first extension portion 3114 and the second extension portion 3115 extend out of the winding slot 220 to facilitate connection with other coils.

In an exemplary embodiment, the first coil 311 is a hairpin coil. Before being inserted into the winding slot 220, the first coil 311 may include two linear edges, which are inserted into the winding slot 220 via the insertion end 230. Parts of the two linear edges received in the winding slot 220 respectively form the first plug portion 3111 and the second plug portion 3112, and parts of the two linear edges extending out of the protruding end 240 respectively form the first extension portion 3114 and the second extension portion 3115.

The first extension portion 3114 and the second extension portion 3115 are both disposed at the welded end 330 of the stator winding 300. After the first coil 311 is inserted into the stator iron core 200, the first extension portion 3114 and the second extension portion 3115 may be bent such that the first extension portion 3114 and the second extension portion 3115 are welded with other coils.

In some embodiments, the second coil 312 further includes a third extension portion 3124 and a fourth extension portion 3125, the third extension portion 3124 extends from an end of the third plug portion 3121 away from the second connection portion 3123, and the fourth extension portion 3125 extends from an end of the fourth plug portion 3122 away from the second connection portion 3123. The third extension portion 3124 and the fourth extension portion 3125 extend out of the winding slot 220 to facilitate connection with other coils.

In an exemplary embodiment, the second coil 312 is a hairpin coil.

In some embodiments, the first extension portion 3114 is bent towards the fourth plug portion 3122 with respect to the first plug portion 3111. The fourth extension portion 3125 is bent towards the first plug portion 3111 with respect to the fourth plug portion 3122 and connected to the first extension portion 3114.

The first extension portion 3114 and the fourth extension portion 3125 are bent relative to each other, such that the dimension requirements for the first extension portion 3114 and the fourth extension portion 3125 can be reduced, and the height of the stator winding 300 at the weld end 330 can be decreased.

In some embodiments, the first extension portion 3114 is welded to the fourth extension portion 3125. The welding process is simple, and a contact resistance between the first extension portion 3114 and the fourth extension portion 3125 can be reduced.

In some embodiments, the second extension portion 3115 is bent relative to the second plug portion 3112 to facilitate welding of the second extension portion 3115 to other coils. The bending direction of the second extension portion 3115 is not limited in the present disclosure. In an exemplary embodiment, the second extension portions 3115 of some of the coil elements 310 may be bent in different directions.

In some embodiments, the third extension portion 3124 is bent relative to the third plug portion 3121 to facilitate welding of the third extension portion 3124 to other coils. The bending direction of the third extension portion 3124 is not limited in the present disclosure. In an exemplary embodiment, the third extension portions 3124 of some of the coil elements 310 may be bent in different directions.

In some embodiments, the number of the plurality of winding slots 220 is 12·M, where M is a positive integer. The first plug portion 3111 and the second plug portion 3112 of the first coil 311 span seven winding slots 220. The third plug portion 3121 and the fourth plug portion 3122 of the second coil 312 span five winding slots 220.

In an exemplary embodiment, the number of the winding slots 220 may be twelve, twenty-four, thirty-six, forty-eight, sixty or seventy-two. This embodiment may expand the use range of the winding configuration and adapt to different voltage and power ranges.

The first coil 311 is a long-pitch coil having a span across seven winding slots 220. The second coil 312 is a short-pitch coil having a span across five winding slots 220.

The combination of the long-pitch coil and the short-pitch coil may form a concentric embedded arrangement at the wire insertion end 320 of the stator winding 300, and the second connection portion 3123 of the second coil 312 may pass between the first connection portion 3113 and the stator iron core 200, thereby reducing an additional space occupied in the axial direction of the stator iron core 200 and reducing the height of the coil elements 310 in the axial direction. The span of the first coil 311 and the span of the second coil 312 are adapted to the number of the winding slots 220 such that the plurality of coil elements 310 can be embedded in the winding slots 220.

According to the invention, each of the first plug portion 3111, the third plug portion 3121, the fourth plug portion 3122, and the second plug portion 3112 is used as a flat wire conductor in a corresponding one of the winding slots 220. N flat wire conductor layers are arranged in each of the winding slots 220, where n is a positive even number. The n flat wire conductor layers are denoted as an L₁ flat wire conductor layer, ... an Lᵢ flat wire conductor layer, ... and an Lₙ flat wire conductor layer in a direction in which a bottom 221 of the winding slot 220 is directed towards an opening 222 of the winding slot 220, where 1 ≤ i ≤ n.

The first plug portion 3111, the second plug portion 3112, the third plug portion 3121, and the fourth plug portion 3122 of each of the coil elements 310 are four flat wire conductors of the coil element 310. The four flat wire conductors each are an effective edge of a corresponding one of the coils, and are embedded in a part of the stator iron core 200 for electromagnetic pole energy conversion. The n flat wire conductor layers can improve the energy conversion efficiency of electromagnetic poles.

The four flat wire conductors of the coil element 310 are embedded in the four winding slots 220, respectively. The n flat wire conductor layers in each of the winding slot 220 belong to n coil elements 310, respectively.

The opening 222 of the winding slot 220 is formed in the inner wall 210 of the stator iron core 200 facing towards the rotor. The bottom 221 of the winding slot 220 is a bottom wall of the winding slot 220 opposite to the opening 222.

In an exemplary embodiment, n may be two, four, six, eight, sixteen, or thirty-two.

In some embodiments, a section of the flat wire conductor may be in a rectangular shape. The rectangular flat wire conductors can increase the slot space-factor.

In some embodiments, as shown in FIG. 4, n is eight. In an exemplary embodiment, the L₁ flat wire conductor layer to an L₈ flat wire conductor layer may also be referred to as a flat wire conductor layer, b flat wire conductor layer, c flat wire conductor layer, d flat wire conductor layer, e flat wire conductor layer, f flat wire conductor layer, g flat wire conductor layer, and h flat wire conductor layer, respectively.

According to the invention, the stator winding 300 includes a plurality of phase windings, and each of the plurality of phase windings includes at least one branch that includes coil elements 310.

The number of the phase windings may be two, three, four, or five. In other embodiments of the present disclosure, the number of the phase windings may also be greater than 5.

The stator 100 of the embodiments of the present disclosure is applicable to motors having different numbers of phases to adapt to different voltage and power ranges.

In some embodiments, the stator winding 300 includes three phase windings, i.e., a first phase winding, a second phase winding, and a third phase winding. In another exemplary embodiment of the present disclosure, the first phase winding is a U-phase winding. The second phase winding is a V-phase winding. The third phase winding is a W-phase winding.

Each of the phase windings may include only one branch or may include a plurality of branches. The branches of the phase windings may also be referred to as parallel branches.

The number of the branches of the phase windings may be any integer to expand the range of winding design usage to accommodate different voltage and power ranges.

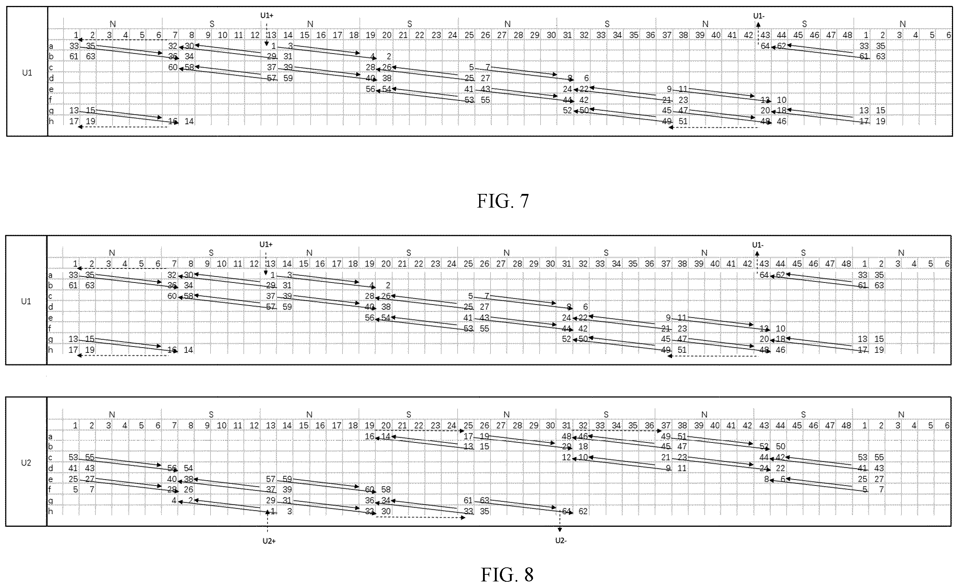

In some embodiments, each of the branches (e.g., a branch U1 shown in FIGS. 7 to 17 described below) includes a plurality of coil elements 310. The present embodiment does not limit the number of the coil elements 310 of the branch.

The number of the coil elements 310 of the branch may be freely adjusted as requirements to expand the use range of the winding design, thereby adapting to different voltage and power ranges.

In some embodiments, the stator winding 300 may be connected as a full-pitch winding, a short-pitch winding, or a multi-layer winding.

According to the invention, the flat wire conductors of at least two of the coil elements 310 connected to each other are located in the same layer.

The same layer refers to an order in which the flat wire conductors are laminated in the winding slot 220. For example, the flat wire conductors of two of the coil elements 310 connected to each other are both the a flat wire conductor layer or the h flat wire conductor layer.

In an exemplary embodiment, as shown in FIGS. 5 and 6, a second extension portion 3115 of one coil element 310 of the coil elements and a second extension portion 3115 of another coil element 310 of the coil elements are welded with each other. A second plug portion 3112 of the one coil element 310 and a second plug portion 3112 of the another coil element 310 are both the h flat wire conductor layers.

In the embodiment of the present disclosure, at least two coil elements 310 may be welded with a full pitch without cross-layer welding, thereby simplifying the welding process. The flat wire conductors connected in the same layer can also balance slot potentials of the branches and reduce the current-circulation loss among the branches.

In some embodiments, the L₁ flat wire conductor layers (e.g., the a flat wire conductor layers) of at least two coil elements 310 are connected in the branch. The L₁ flat wire conductor layers of the two coil elements 310 are arranged close to a radial outer end of the stator iron core to facilitate welding.

In some embodiments, the Lₙ flat wire conductor layers (e.g., the h flat wire conductor layers) of at least two coil elements 310 are connected in the branch. The Lₙ flat wire conductor layers of the two coil elements 310 are arranged close to a radial inner end of the stator iron core 200 to facilitate welding.

In some embodiments, the L₁ flat wire conductor layers of at least two coil elements 310 are connected and the Lₙ flat wire conductor layers of at least two coil elements 310 are connected in the branch.

In some embodiments, a first lead and a second lead are provided at two ends of the branch, and the first lead and the second lead are connected to different flat wire conductors.

The flat wire conductor connected to the first lead may be any flat wire conductor layer, and the flat wire conductor connected to the second lead may be any flat wire conductor layer. This embodiment is not limited thereto.

The first lead and the second lead are two connection ends of the branch, both of which may be used to connect with a busbar or other components to connect the branch to an external circuit.

One of the first lead and the second lead is a positive lead, and another one of the first lead and the second lead is a negative lead.

In some embodiments, the flat wire conductor connected to the first lead and the flat wire conductor connected to the second lead are disposed in different winding slots 220, to increase a spacing between the first lead and the second lead and reduce the risk of a short circuit due to contact between the first lead and the second lead.

In some embodiments, the second extension portion 3115 of the coil element 310 at a leading end of the branch may serve as a first lead, and the second extension portion 3115 of the coil element 310 at a tail end of the branch may serve as a second lead. With the second extension portion 3115 of the coil element 310 as a lead, it is possible to reduce components and costs, and improve space utilization.

In some embodiments, the flat wire conductor connected to the first lead and the flat wire conductor connected to the second lead are arrange in the same layer. In an exemplary embodiment, the flat wire conductor connected to the first lead and the flat wire conductor connected to the second lead are both the a flat wire conductor layers.

This embodiment facilitates arrangement of busbars and facilitates the connection of the first lead and the second lead to the external circuit.

In some embodiments, the branch includes k flat wire conductor layers, where k is a positive integer greater than 1. The k flat wire conductor layers are denoted as an A₁ flat wire conductor layer, an A₂ flat wire conductor layer, ... an Aₖ₋₁ flat wire conductor layer, and an Aₖ flat wire conductor layer in a current flow direction.

The k flat wire conductor layers of the branch are connected in series, and the current flows sequentially from the A₁ flat wire conductor layer to the Aₖ flat wire conductor layer.

In an exemplary embodiment, the A₁ flat wire conductor layer is connected to the first lead and the Aₖ flat wire conductor layer is connected to the second lead.

In some embodiments, any two flat wire conductors of the branch that are located in the same winding slot 220 and are adjacent to each other are denoted as an Aⱼ flat wire conductor layer and an A₁ flat wire conductor layer, respectively, where 1 ≤ j <I ≤ k, and I-j ≤ k/2.

The greater a difference between the serial numbers of the flat wire conductors is, the greater a pressure difference between the two flat wire conductors is. If a difference between serial numbers of two adjacent flat wire conductors located in the same winding slot 220 is too great, a voltage stress between the flat wire conductors in the winding slot 220 may be too high. The embodiments of the present disclosure can satisfy I-j ≤ k/2 to reduce the voltage stress between the flat wire conductors in the winding slot 220.

In particular, the present embodiment is not limited to the coil elements 310 described above, and other manners of winding a coil may be used in the present embodiment as long as the serial number difference of the flat wire conductors satisfies a range requirement.

In some embodiments, the phase windings each include 2P pole-phase groups, where P is a positive integer. Each of the phase windings includes a plurality of branches, and a plurality of the coil elements 310 of at least one of the plurality of branches is distributed in all of the pole-phase groups.

2P may be the total number of magnetic poles of the stator 100.

According to the embodiments of the present disclosure, the plurality of coil elements 310 of at least one of the plurality of branches is distributed in all of the pole-phase groups to reduce potential imbalance of the branch due to rotor eccentricity.

FIG. 7 is a schematic view of one branch of a stator according to some embodiments of the present disclosure. FIG. 7 shows one branch U1 of the U-phase winding. The branches of the stator winding of the present disclosure are described in detail below, taking the branch U1 as an example.

In FIG. 7, N and S denote the two poles of the stator, respectively. In an embodiment, the stator has eight poles, i.e., four pole pairs.

The stator iron core has forty-eight winding slots. In FIG. 7, the forty-eight winding slots are represented by a row of numbers below the N pole and the S pole, i.e., 1 to 48. Each of the poles corresponds to six winding slots.

Each of the winding slots receives eight flat wire conductors therein. In FIG. 7, the eight flat wire conductors are represented as a flat wire conductor layer, b flat wire conductor layer, c flat wire conductor layer, d flat wire conductor layer, e flat wire conductor layer, f flat wire conductor layer, g flat wire conductor layer, and h flat wire conductor layer, respectively.

The branch U1 includes sixteen coil elements, i.e., the branch U1 includes sixty-four flat wire conductors. In FIG. 7, the sixty-four flat wire conductors are represented by sixty-four serial numbers arranged in the table. The sixty-four flat wire conductors are connected in sequence in accordance with the serial numbers. The solid arrows in FIG. 7 indicate manners in which the sixty-four flat wire conductors are connected at the wire insertion end, and the dashed arrows indicate manners in which the flat wire conductors are connected at the welded end. In FIG. 7, every four flat wire conductors belong to one coil element from 1 to 64.

In an exemplary embodiment, the positive lead is a first lead, and the negative lead is a second lead. In FIG. 7, U1+ represents the first lead, and U1- represents the second lead.

The first lead U1+ is connected to the 1^{st} flat wire conductor, and the second lead U1- is connected to the 64^{th} flat wire conductor.

In some embodiments, the coil element including the 33^{rd} to 36^{th} flat wire conductors are connected to the coil element including the 29^{th} to 32^{nd} flat wire conductors. The 32^{nd} flat wire conductor and the 33^{rd} flat wire conductor are both a flat wire conductor layers. These two coil elements may be welded with a full pitch without cross-layer welding, thereby simplifying the welding process. The flat wire conductors connected in the same layer can also balance the slot potentials of the branches and reduce the current-circulation loss among the branches.

In an exemplary embodiment, the coil element including the 13^{th} to 16^{th} flat wire conductors are connected to the coil element including the 17^{th} to 20^{th} flat wire conductors. The 16^{th} flat wire conductor and the 17^{th} flat wire conductor are both h flat wire conductor layers.

In an exemplary embodiment, the coil element including the 45^{th} to 48^{th} flat wire conductors are connected to the coil element including the 49^{th} to 52^{nd} flat wire conductors. The 48^{th} flat wire conductor and the 49^{th} flat wire conductor are both h flat wire conductor layers.

In the branch U1 of the embodiment of the present disclosure, the flat wire conductors of three pairs of coil elements are connected in the same layer, to balance the slot potentials of the branches and reduce the current-circulation loss among the branches.

In some embodiments, the 1^{st} flat wire conductor connected to the first lead U1+ is located in the 13^{th} winding slot, and the 64^{th} flat wire conductor connected to the second lead U1- is located in the 43^{rd} winding slot.

In some embodiments, the 1^{st} flat wire conductor connected to the first lead U1+ and the 64^{th} flat wire conductor connected to the second lead U1- are both a flat wire conductor layers. This embodiment facilitates the arrangement of the busbars and facilitates the connection of the first lead U1+ and second lead U1- to the external circuit.

In some embodiments, the stator includes eight poles, and correspondingly, the phase winding includes eight pole phase groups. The sixteen conductors of the branch U1 are arranged in the eight pole phase groups to reduce potential imbalance of the branch due to rotor eccentricity.

In some embodiments, the branch U1 constitutes a full-pitch winding.

In some embodiments, the 1^{st} flat wire conductor, the 29^{th} flat wire conductor, the 37^{th} flat wire conductor, and the 57^{th} flat wire conductor are sequentially laminated in the 13^{th} winding slot. The greater the difference between the serial numbers of adjacent flat wire conductors is, the greater the pressure difference between the two flat wire conductors is. In the 13^{th} winding slot, the serial number difference between the 1^{st} flat wire conductor and the 29^{th} flat wire conductor is the greatest, and the pressure difference between the 1^{st} flat wire conductor and the 29^{th} flat wire conductor is also the greatest. The present disclosure enables the serial number difference between any two adjacent flat wire conductors that are located in the same winding slot in the branch U1 to be smaller than 32 (i.e., half of the total number of the flat wire conductors of the branch) by means of reasonable winding of the coils, such that the voltage stress between the flat wire conductors in the winding slot can be reduced. The winding pattern shown in FIG. 7 reduces the voltage stress in the winding slot by 57%.

FIG. 8 is a schematic view of one phase winding of a stator according to some embodiments of the present disclosure. In an exemplary embodiment, FIG. 8 shows a U-phase winding. The stator winding of the present disclosure is described in detail below, taking a U-phase winding as an example.

As shown in FIG. 8, the U-phase winding includes a plurality of branches, two of which serve as a first branch U1 and a second branch U2.

To facilitate understanding, FIG. 8 divides the first branch U1 and the second branch U2 of the U-phase winding into two tables.

In FIG. 8, U1+ represents the first lead of the first branch U1, and U1- represents the second lead of the first branch U1. U2+ represents the first lead of the second branch U2, and U2- represents the second lead of the second branch U2. The meaning of other characters in FIG. 8 can be understood with reference to FIG. 7.

As shown in FIG. 8, in some embodiments, the plurality of coil elements of each branch is distributed in all of the pole-phase groups. In an exemplary embodiment of the present disclosure, sixteen coil elements of the first branch U1 are distributed in eight pole-phase groups, and the sixteen coil elements of the second branch U2 are also distributed in eight pole-phase groups. This embodiment can reduce branch potential imbalance caused by rotor eccentricity.

In some embodiments, a plurality of branches of a phase winding may be connected in series or in parallel. In an embodiment, the first branch U1 and the second branch U2 may be connected in series or in parallel.

In some embodiments, a span between the flat wire conductor connected to the first lead of the first branch and the flat wire conductor connected to the first lead of the second branch is smaller than or equal to a pole pitch. The embodiments of the present disclosure can reduce a spacing between the first leads of the two branches, facilitate the connection of the first leads of the two branches, and facilitate the arrangement of the busbars and the implementation of the winding treatment process.

In some embodiments, the flat wire conductor connected to the first lead of the first branch and the flat wire conductor connected to the first lead of the second branch are disposed in the same winding slot. According to the embodiments of the present disclosure, the first leads of the two branches are leaded out from the same winding slot, thereby further reducing the distance between the first leads of the two branches, facilitating the connection of the first leads of the two branches, and facilitating the arrangement of bus bars and the implementation of winding treatment process.

As shown in FIG. 8, the 1^{st} flat wire conductor of the first branch U1 is connected to the first lead U1+ of the first branch U1, and the 1^{st} flat wire conductor of the second branch U2 is connected to the second lead U2+ of the second branch U2. In another exemplary embodiment of the present disclosure, the 1^{st} flat wire conductor of the first branch U1 and the 1^{st} flat wire conductor of the second branch U2 are disposed in the same winding slot, i.e., the winding slot 13. The first leads of the two branches are leaded out from the same winding slot, to further reduce the spacing between the first leads of the two branches, facilitate the connection of the first leads of the two branches, and facilitate the arrangement of the busbars and the implementation of the winding treatment process.

In some embodiments, the 1^{st} flat wire conductor of the first branch U1 and the 64^{th} flat wire conductor of the first branch U1 are both a flat wire conductor layers, and the 1^{st} flat wire conductor of the second branch U2 and the 64^{th} flat wire conductor of the second branch U1 are both h flat wire conductor layers. This embodiment facilitates the arrangement of the busbars, facilitating the connection of the first lead (U1+, U2+) and the second lead (U1-, U2-) to the external circuit.

In some embodiments, the 32^{nd} flat wire conductor and the 33^{rd} flat wire conductor of the second branch U2 are both h flat wire conductor layers, and the coil element including the 32^{nd} flat wire conductor and the coil element including the 33^{rd} flat wire conductor are connected in the same layer. The flat wire conductors connected in the same layer can also balance the slot potentials of the branches and reduce the current-circulation loss between the branches.

The U-phase winding shown in FIG. 8 can balance the slot potentials of the branches, reduce the current-circulation loss between the branches, reduce the imbalance of branch electromotive force caused by rotor eccentricity, reduce the voltage stress of the conductors in the slot, while facilitating the arrangement of busbars and the implementation of winding treatment process. The U-phase winding shown in FIG. 8 can reduce the voltage stress in the winding slot by 57%.

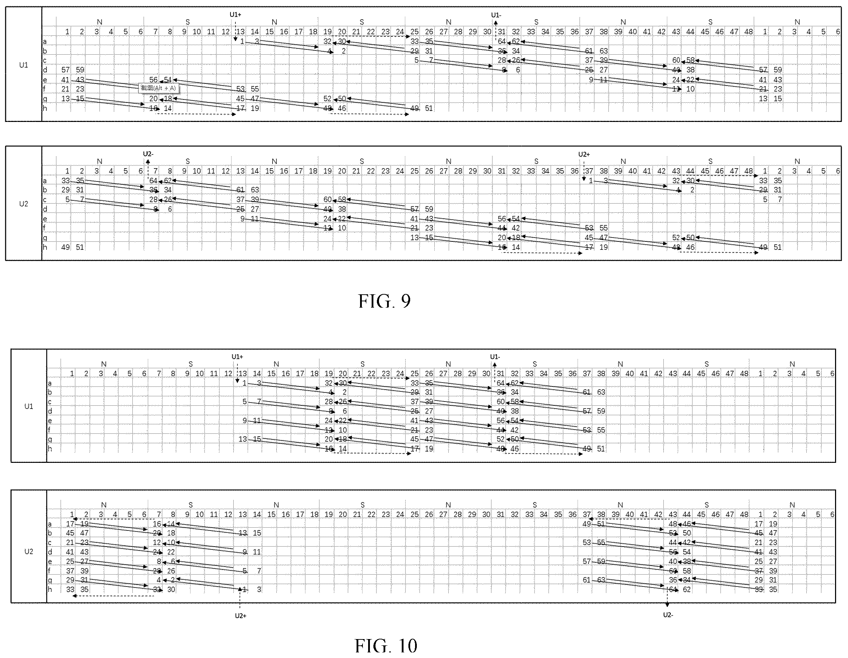

FIG. 9 is a schematic view of one phase winding of a stator according to further embodiments of the present disclosure. In an exemplary embodiment, FIG. 9 shows a U-phase winding.

The meaning of the characters in FIG. 9 can be understood with reference to FIG. 8.

The U-phase winding shown in FIG. 9 changes the manner in which the coil is wound as compared to the U-phase winding shown in FIG. 8.

As shown in FIG. 9, the 1^{st} flat wire conductor of the first branch U1 is connected to the first lead U1+ of the first branch U1, and the 1^{st} flat wire conductor of the second branch U2 is connected to the second lead U2+ of the second branch U2.

In some embodiments, the 1^{st} flat wire conductor of the first branch U1 and the 1^{st} flat wire conductor of the second branch U2 are disposed in different winding slots. For example, the 1^{st} flat wire conductor of the first branch U1 is disposed in the 13^{th} winding slot, and the 1^{st} flat wire conductor of the second branch U2 is disposed in the 37^{th} winding slot.

In some embodiments, the 1^{st} flat wire conductor of the first branch U1 and the 1^{st} flat wire conductor of the second branch U2 are both a flat wire conductor layers. This embodiment can reduce the spacing between the first leads of the two branches, facilitate the connection of the first leads of the two branches, and facilitate the arrangement of the busbars and the implementation of the winding treatment process.

In some embodiments, both the 64^{th} flat wire conductor of the first branch U1 and the 64^{th} flat wire conductor of the second branch U2 are also a flat wire conductor layers. This embodiment facilitates the arrangement of the busbars and the implementation of the winding treatment process.

The U-phase winding shown in FIG. 9 can balance the slot potentials of the branches, reduce the current-circulation loss between the branches, and reduce the imbalance of branch electromotive force caused by rotor eccentricity.

FIG. 10 is a schematic view of one phase winding of a stator according to further embodiments of the present disclosure. In an exemplary embodiment, FIG. 10 shows a U-phase winding.

The meaning of the characters in FIG. 10 can be understood with reference to FIG. 8.

In some embodiments, the phase winding includes a plurality of branches. The plurality of the coil elements of each of the branches is distributed in some of the pole-phase groups. In an exemplary embodiment of the present disclosure, as shown in FIG. 10, sixteen coil elements of the first branch U1 are distributed in some of the pole-phase groups. In other words, the coil elements of the first branch U1 are not arranged in some of the pole-phase groups. Sixteen coil elements of the second branch U2 are distributed in some of the pole-phase groups. In other words, the coil elements of the second branch U2 are not arranged in some pole-phase groups.

In an exemplary embodiment, the sixteen coil elements of the first branch U1 are distributed in four pole-phase groups, and the sixteen coil elements of the second branch U2 are distributed in the remaining four pole-phase groups.

In some embodiments, the 1^{st} flat wire conductor of the first branch U1 and the 1^{st} flat wire conductor of the second branch U2 are disposed in the same winding slot, i.e., the winding slot 13. The first leads of the two branches are leaded out from the same winding slot, to further reduce the spacing between the first leads of the two branches, facilitate the connection of the first leads of the two branches, and facilitate the arrangement of the busbars and the implementation of the winding treatment process.

In some embodiments, the 1^{st} flat wire conductor of the first branch U1 and the 64^{th} flat wire conductor of the first branch U1 are both a flat wire conductor layers, and the 1^{st} flat wire conductor of the second branch U2 and the 64^{th} flat wire conductor of the second branch U1 are both h flat wire conductor layers.

In some embodiments, the 16^{th} flat wire conductor of the first branch U1 and the 17^{th} flat wire conductor of the first branch U1 are connected in the same layer. The 48^{th} flat wire conductor of the first branch U1 and the 49^{th} flat wire conductor of the first branch U1 are connected in the same layer. The 32^{nd} flat wire conductor of the second branch U2 and the 33^{rd} flat wire conductor of the second branch U2 are connected in the same layer. The flat wire conductors connected in the same layer can also balance the slot potentials of the branches and reduce the current-circulation loss between the branches.

The U-phase winding shown in FIG. 10 can balance the slot potentials of the branches, reduce the current-circulation loss between the branches, and reduce the voltage stress of the conductors in the slot, while facilitating the arrangement of busbars and the implementation of winding treatment process. The U-phase winding shown in FIG. 10 reduces the voltage stress in the winding slot by 57%.

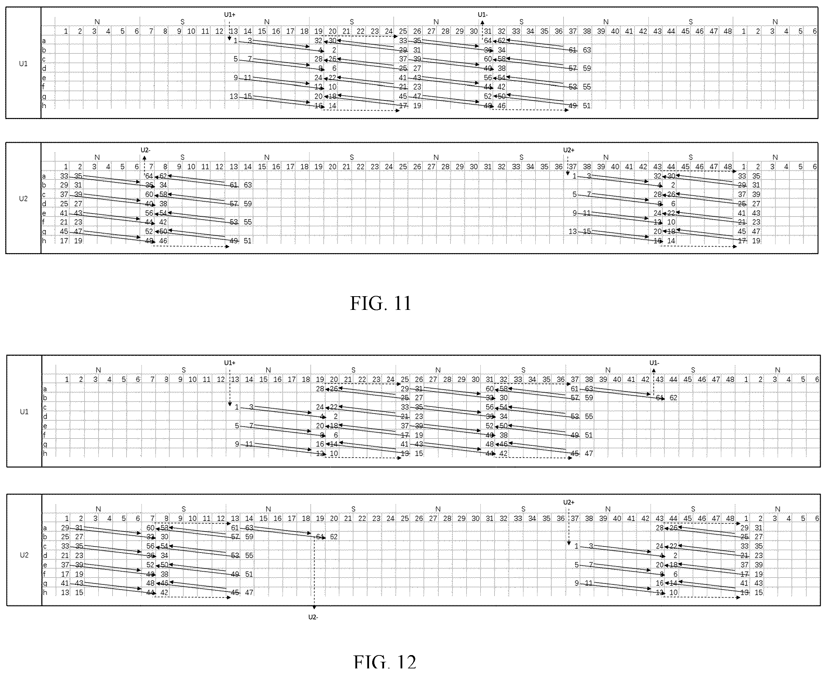

FIG. 11 is a schematic view of one phase winding of a stator according to still further embodiments of the present disclosure. In an exemplary embodiment, FIG. 11 shows a U-phase winding.

The meaning of the characters in FIG. 11 can be understood with reference to FIG. 8.

As shown in FIG. 11, sixteen coil elements of the first branch U1 are distributed in some of the pole-phase groups, and sixteen coil elements of the second branch U2 are distributed in some of the pole-phase groups.

In some embodiments, the 1^{st} flat wire conductor of the first branch U1 and the 1^{st} flat wire conductor of the second branch U2 are both a flat wire conductor layers. This embodiment can reduce the spacing between the first leads of the two branches, facilitate the connection of the first leads of the two branches, and facilitate the arrangement of the busbars and the implementation of the winding treatment process.

In some embodiments, both the 64^{th} flat wire conductor of the first branch U1 and the 64^{th} flat wire conductor of the second branch U2 are also a flat wire conductor layers. This embodiment facilitates the arrangement of the busbars and the implementation of the winding treatment process.

In some embodiments, the 16^{th} flat wire conductor of the first branch U1 and the 17^{th} flat wire conductor of the first branch U1 are connected in the same layer. The 32^{nd} flat wire conductor of the first branch U1 and the 33^{rd} flat wire conductor of the first branch U1 are connected in the same layer. The 48^{th} flat wire conductor of the first branch U1 and the 49^{th} flat wire conductor of the first branch U1 are connected in the same layer. The flat wire conductors connected in the same layer can also balance the slot potentials of the branches and reduce the current-circulation loss between the branches.

In some embodiments, the 16^{th} flat wire conductor of the second branch U2 and the 17^{th} flat wire conductor of the second branch U2 are connected in the same layer. The 32^{nd} flat wire conductor of the second branch U2 and the 33^{rd} flat wire conductor of the second branch U2 are connected in the same layer. The 48^{th} flat wire conductor of the second branch U2 and the 49^{th} flat wire conductor of the second branch U2 are connected in the same layer. The flat wire conductors connected in the same layer can also balance the slot potentials of the branches and reduce the current-circulation loss between the branches.

The U-phase winding shown in FIG. 11 can balance the slot potentials of the branches and reduce the current-circulation loss between the branches, while facilitating the arrangement of busbars and the implementation of winding treatment process.

FIG. 12 is a schematic view of one phase winding of a stator according to yet further embodiments of the present disclosure. In an exemplary embodiment, FIG. 12 shows a U-phase winding.

In some embodiments, the first lead may be connected to an intermediate flat wire conductor layer, and the second lead may also be connected to an intermediate flat wire conductor layer. In an exemplary embodiment, the b to g flat wire conductor layers may be understood as intermediate layers. Connecting the leads to the intermediate flat wire conductor layers can limit and support the leads by other coils at two sides of the leads, reducing the deformation of the leads.

In some embodiments, the flat wire conductor connected to the first lead and the flat wire conductor connected to the second lead are located in different layers in the same branch.

In an exemplary embodiment, as shown in FIG. 12, the 1^{st} flat wire conductor of the first branch U1 is connected to the first lead U1+ of the first branch U1, and the 1^{st} flat wire conductor of the second lead wire U2 is connected to the second lead U2+ of the second branch U2. In an exemplary embodiment, the 1^{st} flat wire conductor of the first branch U1 may be c flat wire conductor layer, and the 1^{st} flat wire conductor of the second branch U1 may be c flat wire conductor layer.

In some embodiments, the 64^{th} flat wire conductor of the first branch U1 may be b flat wire conductor layer, and the 64^{th} flat wire conductor of the second branch U1 may be b flat wire conductor layer.

Compared with the U-phase windings shown in FIGS. 8 to 11, the U-phase winding shown in FIG. 12 changes the lead-out position of the leads to facilitate the arrangement of busbars and the implementation of the winding process. The U-phase winding shown in FIG. 12 can also balance the slot potentials of the branches and reduce the current-circulation loss between the branches.

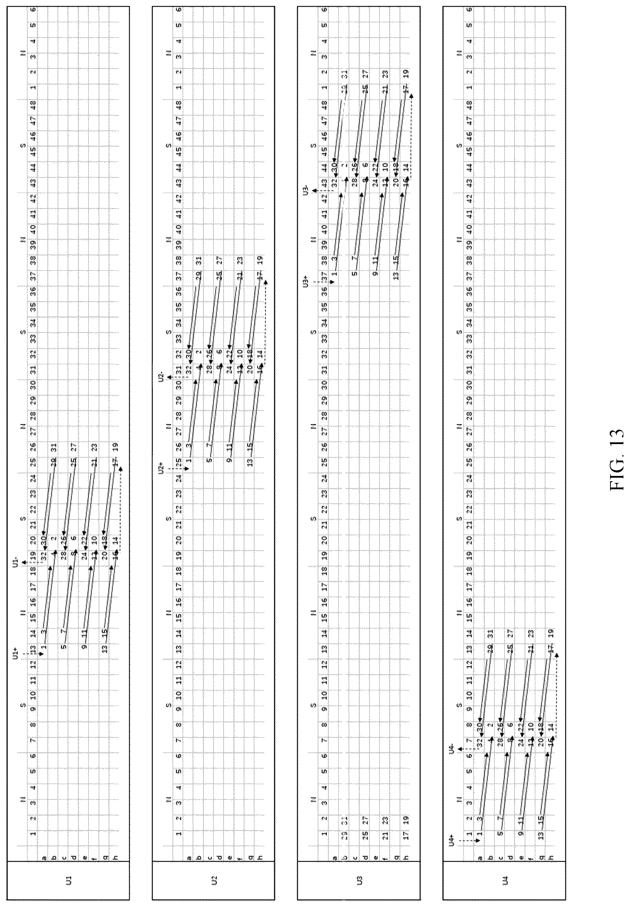

FIG. 13 is a schematic view of one phase winding of a stator according to further embodiments of the present disclosure. In an exemplary embodiment, FIG. 13 shows a U-phase winding.

The embodiments of the present disclosure do not limit the number of the branches of the phase winding, and the number of the branches of the phase winding may vary. The motor may be applied to different voltage levels and power ranges by varying the number of the branches.

In an exemplary embodiment, as shown in FIG. 13, the U-phase winding includes four branches, which are a first branch U1, a second branch U2, a third branch U3, and a fourth branch U4, respectively. The four branches can meet the low voltage level requirements.

To facilitate understanding, FIG. 13 divides the four branches of the U-phase winding into four tables.

In FIG. 13, U1+ represents a first lead of the first branch U1, and U1- represents a second lead of the first branch U1. U2+ represents a first lead of the second branch U2, and U2-represents a second lead of the second branch U2. U3+ represents a first lead of the third branch U3, and U3- represents a second lead of the third branch U3. U4+ represents a first lead of the fourth branch U4, and U4- represents a second lead of the fourth branch U4. Meanings of other characters in FIG. 13 can be understood with reference to FIG. 8.

As shown in FIG. 13, in some embodiments, the plurality of coil elements of the branches is distributed in some of the pole-phase groups.

In an exemplary embodiment, each of the branches includes eight coil elements, i.e., each of the branches includes thirty-two flat wire conductors.

In an exemplary embodiment, eight coil elements of the first branch U1 are distributed in two pole-phase groups. Eight coil elements of the second branch U2 are distributed in two pole-phase groups. Eight coil elements of the third branch U3 are distributed in two pole-phase groups. Eight coil elements of the fourth branch U4 are distributed in two pole-phase groups.

In some embodiments, the flat wire conductors connected to the first leads of the four branches are arranged in the same layer. In an exemplary embodiment, the 1^{st} flat wire conductor of the first branch U1, the 1^{st} flat wire conductor of the second branch U2, the 1^{st} flat wire conductor of the third branch U3, and the 1^{st} flat wire conductor of the fourth branch U4 are all flat wire conductor layers. This embodiment can facilitate the connection of the first leads of the four branches, facilitating the arrangement of the busbars and the implementation of the winding process.

In some embodiments, in each of the branches, the flat wire conductor connected to the first lead and the flat wire conductor connected to the second lead are arranged in the same layer. In an exemplary embodiment, the 32^{nd} flat wire conductor of the first branch U1, the 32^{nd} flat wire conductor of the second branch U2, the 32^{nd} flat wire conductor of the third branch U3, and the 32^{nd} flat wire conductor of the fourth branch U4 are all a flat wire conductor layers. This embodiment facilitates the arrangement of the busbars, and facilitates the connection of the first lead and the second lead to the external circuit.

The U-phase winding shown in FIG. 13 can balance the slot potentials of the branches, reduce the current-circulation loss among the branches, and change the number of series turns of a single-phase winding, such that the motor may be applied to different voltage levels and power ranges.

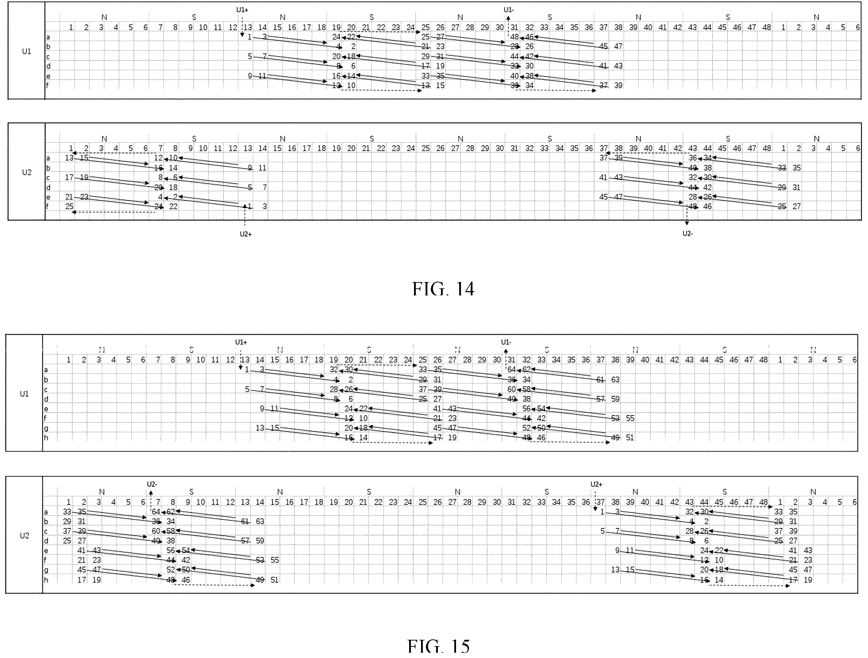

FIG. 14 is a schematic view of one phase winding of a stator according to yet further embodiments of the present disclosure. In an exemplary embodiment, FIG. 14 shows a U-phase winding.

The U-phase winding shown in FIG. 14 changes the number of the flat wire conductor layers in the winding slot as compared to the U-phase winding shown in FIG. 10. The number of the flat wire conductor layers in the winding slot is changed, and thus the number of series turns of the single-phase winding can be changed, such that the motor may be applied to different voltage levels and power ranges.

In an exemplary embodiment, as shown in FIG. 14, six flat wire conductor layers are arranged in the winding slot.

In an exemplary embodiment of the present disclosure, as shown in FIG. 14, the U-phase winding includes a first branch U1 and a second branch U2. The first branch U1 includes twelve coil elements, i.e., the first branch U1 includes forty-eight flat wire conductors. The second branch U2 includes twelve coil elements, i.e., the second branch U2 includes forty-eight flat wire conductors.

In some embodiments, the twelve coil elements of the first branch U1 are distributed in some of the pole-phase groups, and the twelve coil elements of the second branch U2 are distributed in some of the pole-phase groups.

The U-phase winding shown in FIG. 14 can balance the slot potentials of the branches, reduce the current-circulation loss between the branches, and change the number of series turns of a single-phase winding, such that the motor may be applied to different voltage levels and power ranges.

FIG. 15 is a schematic view of one phase winding of a stator according to still further embodiments of the present disclosure. In an exemplary embodiment, FIG. 15 shows a U-phase winding.

Compared with the U-phase winding shown in FIG. 11, the phase winding shown in FIG. 15 changes the winding manner of the coil, such that the branches of the phase winding form a short-pitch winding connection, thereby reducing winding harmonics and improving motor torque ripple and noise vibration.

The phase winding shown in FIG. 15 can also balance the slot potentials of the branches and reduce the current-circulation loss between the branches.

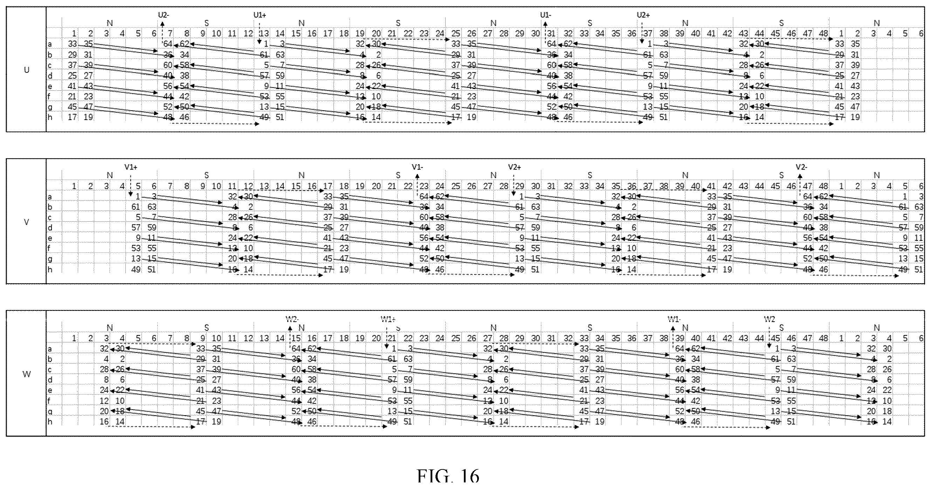

FIG. 16 is a schematic view of a stator winding of a stator according to some embodiments of the present disclosure. In an exemplary embodiment, FIG. 16 shows a U-phase winding, a V-phase winding, and a W-phase winding of the stator winding. For ease of understanding, FIG. 16 divides the three-phase windings of the stator winding into three tables.

In some embodiments, all of the first leads in the plurality of phase windings are connected to the flat wire conductors in different winding slots. This embodiment can increase spacings among the first leads and reduce the phase-to-phase voltage stress.

In some embodiments, all of the second leads in the plurality of phase windings are connected to the flat wire conductors in different winding slots. This embodiment can increase spacings among the second leads and reduce the phase-to-phase voltage stress.

In some embodiments, all of the first leads and all of the second leads are connected to the flat wire conductors in different winding slots. This embodiment can increase the spacings among the first leads and the spacings among the second leads, reducing the phase-to-phase voltage stress.

In an exemplary embodiment, as shown in FIG. 16, the U-phase winding includes a first branch U1 and a second branch U2. U1+ represents a first lead of the first branch U1, and U1- represents a second lead of the first branch U1. U2+ represents a first lead of the second branch U2, and U2- represents a second lead of the second branch U2. In another exemplary embodiment of the present disclosure, the U-phase winding of FIG. 16 may be formed by combining the first branch U1 and the second branch U2 shown in FIG. 11.

The V-phase winding includes a first branch V1 and a second branch V2. V1+ represents a first lead of the first branch V1, and V1- represents a second lead of the first branch V1. V2+ represents a first lead of the second branch V2, and V2- represents a second lead of the second branch V2.

The W-phase winding includes a first branch W1 and a second branch W2. W1+ represents a first lead of the first branch W1, and W1- represents a second lead of the first branch W1. W2+ represents a first lead of the second branch W2, and W2- represents a second lead of the second branch W2.

In some embodiments, twelve flat wire conductors connected to the leads U1+, U1-, U2+, U2-, V1+, V1-, V2+, V2-, W1+, W1-, W2+, and W2- are arranged in twelve winding slots, respectively. The embodiments of the present disclosure can increase spacings among the leads to reduce phase-to-phase voltage stress. The stator winding shown in FIG. 16 can reduce the interphase voltage stress by 25%.

In some embodiments, the twelve flat wire conductors connected to the leads U1+, U1-, U2+, U2-, V1+, V1-, V2+, V2-, W1+, W1-, W2+, and W2- are all flat wire conductor layers. Each of the aforementioned leads is adjacent to the radial outer end of the stator iron core to facilitate welding.

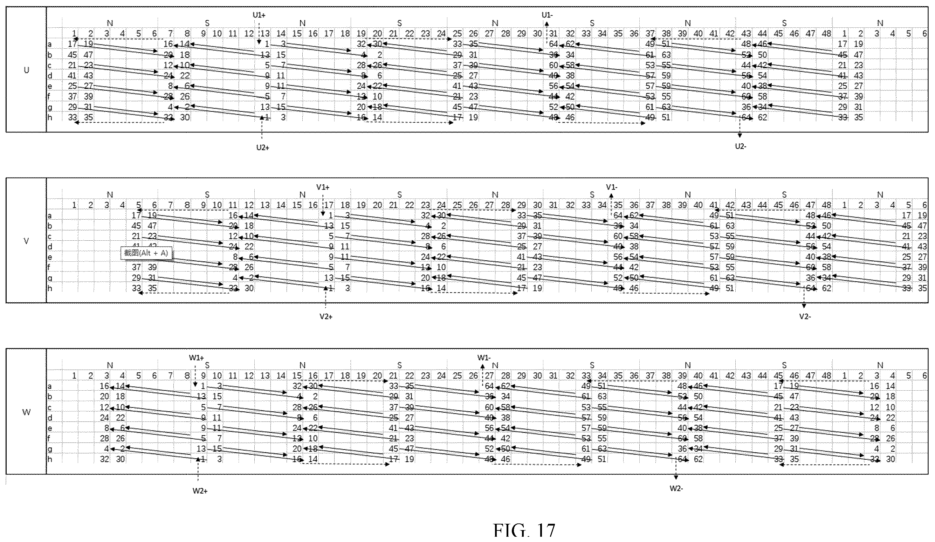

FIG. 17 is a schematic view of a stator winding of a stator according to further embodiments of the present disclosure. In an exemplary embodiment, FIG. 17 shows a U-phase winding, a V-phase winding, and a W-phase winding of the stator winding.

The meanings of the characters in FIG. 17 can be understood with reference to FIG. 16.

In an exemplary embodiment, the U-phase winding of FIG. 17 may be formed by combining the first branch U1 and the second branch U2 shown in FIG. 10.

As shown in FIG. 17, in some embodiments, the flat wire conductors connected to the first leads U1+ and U2+ are arranged in the same winding slot. The flat wire conductors connected to the first leads V1+ and V2+ are arranged in the same winding slot. The flat wire conductors connected to the first leads W1+ and W2+ are arranged in the same winding slot. This embodiment can reduce the spacing between the first leads of two branches of the same phase, facilitate the connection of the first leads, and facilitate the arrangement of busbars and the implementation of winding process.

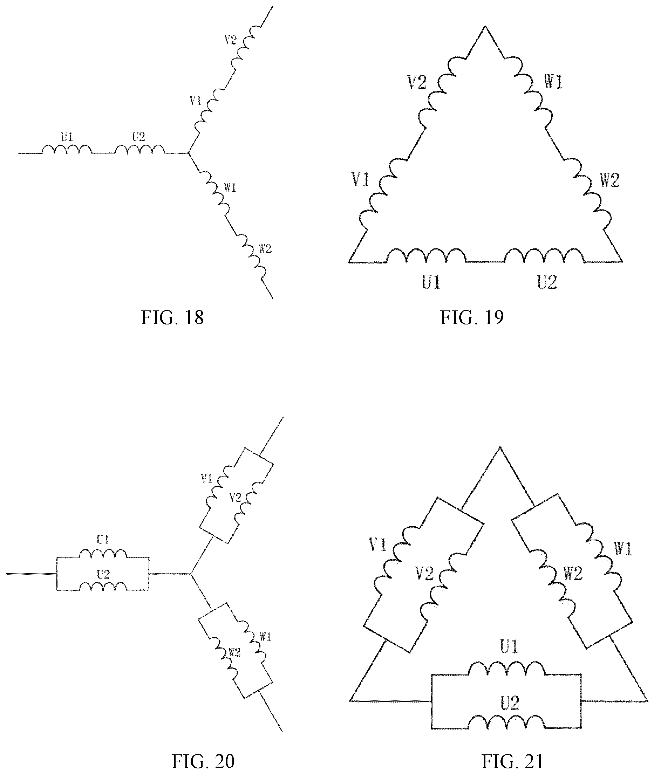

FIG. 18 is a schematic view of a connection of phase windings of a stator winding of a stator according to some embodiments of the present disclosure.

As shown in FIG. 18, in some embodiments, the stator winding includes three phase windings, i.e., a U phase winding, a V phase winding, and a W phase winding. In an embodiment, the three phase windings are connected in a triangle form.

The U-phase winding includes a first branch U1 and a second branch U2 connected in series. The V-phase winding includes a first branch V1 and a second branch V2 connected in series. The W-phase winding includes a first branch W1 and a second branch W2 connected in series.

FIG. 19 is a schematic view of a connection of phase windings of a stator winding of a stator according to further embodiments of the present disclosure.

As shown in FIG. 19, in some embodiments, the stator includes three phase windings, namely a U-phase winding, a V-phase winding, and a W-phase winding. Illustratively, the three phase windings are connected in a star configuration.

The U-phase winding includes a first branch U1 and a second branch U2 connected in series. The V-phase winding includes a first branch V1 and a second branch V2 connected in series. The W-phase winding includes a first branch W 1 and a second branch W2 connected in series.

FIG. 20 is a schematic view of a connection of phase windings of a stator winding of a stator according to still further embodiments of the present disclosure.

As shown in FIG. 20, in some embodiments, the stator winding includes three phase windings, i.e., a U-phase winding, a V-phase winding, and a W-phase winding. In an embodiment, the three phase windings are connected in a triangle form.

The U-phase winding includes a first branch U1 and a second branch U2 connected in parallel. The V-phase winding includes a first branch V1 and a second branch V2 connected in parallel. The W-phase winding includes a first branch W1 and a second branch W2 connected in parallel.

FIG. 21 is a schematic view of a connection of phase windings of a stator winding of a stator according to yet further embodiments of the present disclosure.

As shown in FIG. 21, in some embodiments, the stator winding includes three phase windings, i.e., a U-phase winding, a V-phase winding, and a W-phase winding. In an embodiment, the three phase windings are connected in a star form.

The U-phase winding includes a first branch U1 and a second branch U2 connected in parallel. The V-phase winding includes a first branch V1 and a second branch V2 connected in parallel. The W-phase winding includes a first branch W1 and a second branch W2 connected in parallel.

With reference to the different stator windings shown in FIGS. 18 to 21, the number of phase series turns of the stator winding may be adjusted by changing the connection manner of the phase windings and the connection manner of the branches of the phase windings to adapt to different voltage and power level applications.

The embodiments of the present disclosure further provide a flat wire motor including a rotor and the stator provided in any one of the foregoing embodiments, and the rotor is disposed in a space enclosed by an inner wall of the stator iron core.

The flat wire motor according to the embodiment of the present disclosure may be either a generator or an electric motor.

The embodiments of the present disclosure also provide a powertrain including a speed reducer and the flat wire motor as described above. The flat wire motor is connected to the speed reducer in a transmission manner. In an exemplary embodiment of the present disclosure, a driving shaft of the flat wire motor and an input shaft of the speed reducer may be connected in a transmission manner through a transmission member such as a coupler, to output a driving force from the flat wire motor to the speed reducer.

Embodiments of the present disclosure further provide a vehicle including the above powertrain, which is disposed within the vehicle and provides an operating power for the vehicle. In an exemplary embodiment of the present disclosure, in the present embodiment, the vehicle may be specifically a new energy vehicle driven with electric energy, for example. The new energy vehicle may be a hybrid electric vehicle, a pure electric vehicle, or a fuel cell electric vehicle, or may be a vehicle that uses a high-efficiency accumulator as an electric energy source, such as a super capacitor, a flywheel battery, or a flywheel accumulator.

According to some embodiments of the present disclosure, referring to FIGS. 1 to 6, 11, and 16, the stator 100 of the flat wire motor includes the stator iron core 200 and the stator winding 300 provided at the stator iron core 200. The stator iron core 200 has a plurality of winding slots 220 formed in the inner wall 210 thereof, and the plurality of winding slots 220 is arranged along the circumferential direction of the inner wall 210 of the stator iron core 200. The stator winding 300 includes a U-phase winding, a V-phase winding, and a W-phase winding. Each of the phase windings includes two branches, and each of the two branches includes a plurality of coil elements 310 connected in series.

Each of the plurality of coil elements 310 includes the first coil 311 and the second coil 312. The first coil 311 includes the first plug portion 3111, the second plug portion 3112, the first connection portion 3113 connecting the first plug portion 3111 and the second plug portion 3112, the first extension portion 3114 extending from the end of the first plug portion 3111 away from the first connection portion 3113, and the second extension portion 3115 extending from the end of the second plug portion 3112 away from the first connection portion 3113.

The second coil 312 includes the third plug portion 3121, the fourth plug portion 3122, the second connection portion 3123 connecting the third plug portion 3121 and the fourth plug portion 3122, the third extension part 3124 extending from the end of the third plug portion 3121 away from the second connection portion 3123, and the fourth extension part 3125 extending from the end of the fourth plug portion 3122 away from the second connection portion 3123.

The first plug portion 3111, the third plug portion 3121, the fourth plug portion 3122, and the second plug portion 3112 are circumferentially arranged and respectively inserted in different winding slots 220. The first plug portion 3111 is connected to the fourth plug portion 3122. The second plug portion 3123 is located on a side of the first connection portion 3113 facing towards the stator iron core 200.

The first extension portion 3114 is bent towards the fourth plug portion 3122 with respect to the first plug portion 3111. The fourth extension portion 3125 is bent towards the first plug portion 3111 with respect to the fourth plug portion 3122, and is connected to the first extension portion 3114.

It should be noted that the embodiments and the features in the embodiments herein may be combined with one another without conflict.

Finally, it should be noted that the above embodiments are only used to illustrate the technical solution of the present disclosure and is not intended to limit the present disclosure thereto. The present invention is defined by the appended claims.

## Claims

1. A stator (100) for a flat wire motor, the stator (100) comprising:
a stator iron core (200) having a plurality of winding slots (220) formed in an inner wall (210) of the stator iron core (200); and
a stator winding (300) provided at the stator iron core (200), the stator winding (300) comprising a plurality of coil elements (310),
wherein the plurality of winding slots (220) is arranged along a circumferential direction of the inner wall (210) of the stator iron core (200);
wherein each of the plurality of coil elements (310) comprises a first coil (311) and a second coil (312), the first coil (311) comprising a first plug portion (3111), a second plug portion (3112), and a first connection portion (3113) connecting the first plug portion (3111) and the second plug portion (3112), and the second coil (312) comprising a third plug portion (3121), a fourth plug portion (3122), and a second connection portion (3123) connecting the third plug portion (3121) and the fourth plug portion (3122); and
wherein the first plug portion (3111), the third plug portion (3121), the fourth plug portion (3122), and the second plug portion (3112) are arranged along the circumferential direction and respectively inserted in different winding slots of the plurality of winding slots (220), the first plug portion (3111) being connected to the fourth plug portion (3122), and the second connection portion (3123) being located on a side of the first connection portion (3113) facing towards the stator iron core (200);
wherein each of the first plug portion, the third plug portion, the fourth plug portion, and the second plug portion serves as a flat wire conductor in a corresponding one of the plurality of winding slots; and
n flat wire conductor layers are arranged in each of the plurality of winding slots, n being a positive even number, and the n flat wire conductor layers being denoted as an L1 flat wire conductor layer, ... an Li flat wire conductor layer, ... and an Ln flat wire conductor layer in a direction in which a bottom of the winding slot is directed towards an opening of the winding slot, where 1 ≤ i ≤ n ;
wherein the stator winding comprises a plurality of phase windings, each of the plurality of phase windings comprising at least one branch, and the at least one branch comprising the plurality of coil elements;
**characterized in that**,
in the at least one branch, the flat wire conductors of at least two coil elements of the plurality of coil elements connected to one another are arranged in a same flat wire conductor layer.

2. The stator according to claim 1, wherein the first coil (311) further comprises a first extension portion (3114) and a second extension portion (3115), the first extension portion (3114) extending from an end of the first plug portion (3111) away from the first connection portion (3113), and the second extension portion (3115) extending from an end of the second plug portion (3112) away from the first connection portion (3113);
the second coil (312) further comprises a third extension portion (3124) and a fourth extension portion (3125), the third extension portion (3124) extending from an end of the third plug portion (3121) away from the second connection portion (3123), and the fourth extension portion (3125) extending from an end of the fourth plug portion (3122) away from the second connection portion (3123); and
the first extension portion (3114) is bent towards the fourth plug portion (3122) with respect to the first plug portion (3111), the fourth extension portion (3125) being bent towards the first plug portion (3111) with respect to the fourth plug portion (3122) and connected to the first extension portion (3114).

3. The stator according to claim 1 or 2, wherein the number of the plurality of winding slots (220) is 12·M, where M is a positive integer; and
a span between the first plug portion (3111) and the second plug portion (3112) of the first coil (311) is seven winding slots of the plurality of winding slots (220), a span between the third plug portion (3121) and the fourth plug portion (3122) of the second coil (312) is five winding slots of the plurality of winding slots (220).

4. The stator according to claim 1, wherein in the at least one branch, the L₁ flat wire conductor layers of the at least two coil elements (310) are connected; and/or
in the at least one branch, the Lₙ layers flat wire conductor of the at least two coil elements (310) are connected.

5. The stator according to any one of claims 1 to 4, wherein the stator winding (300) comprises a plurality of phase windings, each of the plurality of phase windings comprising at least one branch, and the at least one branch comprising the plurality of coil elements (310); and
each of the at least one branch is provided with a first lead and a second lead respectively at two ends of the branch, the first lead and the second lead being connected to different flat wire conductors, and the flat wire conductor connected to the first lead and the flat wire conductor connected to the second lead being arranged in different winding slots of the plurality of winding slots (220).

6. The stator according to claim 5, wherein the flat wire conductor connected to the first lead and the flat wire conductor connected to the second lead are arranged in a same flat wire conductor layer.

7. The stator according to claim 5 or 6, wherein each of the plurality of phase windings comprises a plurality of branches, two of the plurality of branches being a first branch and a second branch; and
a span between the flat wire conductor connected to the first lead of the first branch and the flat wire conductor connected to the first lead of the second branch is smaller than or equal to a pole pitch.

8. The stator according to claim 7, wherein the flat wire conductor connected to the first lead of the first branch and the flat wire conductor connected to the first lead of the second branch are arranged in a same winding slot of the plurality of winding slots (220).

9. The stator according to any one of claims 5 to 7, wherein all of the first leads of the plurality of phase windings are connected to the flat wire conductors in the different winding slots (220).

10. The stator according to any one of claims 1 to 9, wherein the stator winding (300) comprises a plurality of phase windings, each of the plurality of phase windings comprising at least one branch, and the at least one branch comprising the plurality of coil elements (310);
each of the at least one branch comprises k flat wire conductor layers, k being a positive integer greater than 1, and the k flat wire conductor layers being denoted as an A₁ flat wire conductor layer, an A₂ flat wire conductor layer, ... an Aₖ₋₁ flat wire conductor layer, and an Aₖ flat wire conductor layer in a current flow direction; and
two adjacent flat wire conductors of the branch that are located in the same winding slot (220) are respectively denoted as an Aⱼ flat wire conductor layer and an A_{I} flat wire conductor layer, 1 ≤ j < I ≤ k, where I-j ≤ k/2.

11. The stator according to any one of claims 1 to 10, wherein the stator winding (300) comprises a plurality of phase windings, each of the plurality of phase windings comprising at least one branch, and the at least one branch comprising the plurality of coil elements (310);
the phase winding comprises 2P pole-phase groups, P being a positive integer; and
the phase winding comprises a plurality of branches, coil elements (310) of at least one of the plurality of branches being distributed in all of the 2P pole-phase groups.

12. The stator according to any one of claims 1 to 10, wherein the stator winding (300) comprises a plurality of phase windings, each of the plurality of phase windings comprising at least one branch, and the at least one branch comprising the plurality of coil elements (310);
the phase winding comprises 2P pole-phase groups, P being a positive integer; and
the phase winding comprises a plurality of branches, coil elements (310) of each of the plurality of branches being distributed in some of the 2P pole-phase groups.

13. A flat wire motor, comprising:
a rotor; and
the stator (100) according to any one of claims 1 to 12,
wherein the rotor is disposed in a space enclosed by the inner wall (210) of the stator iron core (200).

## Patentansprüche

1. Stator (100) für einen Flachdrahtmotor, wobei der Stator (100) Folgendes umfasst:
einen Stator-Eisenkern (200) mit mehreren Wicklungsnuten (220), die in einer Innenwand (210) des Stator-Eisenkerns (200) ausgebildet sind, und
eine Statorwicklung (300), die an dem Stator-Eisenkern (200) vorgesehen ist, wobei die Statorwicklung (300) mehrere Spulenelemente (310) umfasst,
wobei die mehreren Wicklungsnuten (220) in Umfangsrichtung der Innenwand (210) des Stator-Eisenkerns (200) angeordnet sind,
wobei jedes der mehreren Spulenelemente (310) eine erste Spule (311) und eine zweite Spule (312) umfasst, wobei die erste Spule (311) einen ersten Steckabschnitt (3111), einen zweiten Steckabschnitt (3112) und einen ersten Verbindungsabschnitt (3113) umfasst, der den ersten Steckabschnitt (3111) und den zweiten Steckabschnitt (3112) verbindet, und die zweite Spule (312) einen dritten Steckabschnitt (3121), einen vierten Steckabschnitt (3122) und einen zweiten Verbindungsabschnitt (3123) umfasst, der den dritten Steckabschnitt (3121) und den vierten Steckabschnitt (3122) verbindet, und
wobei der erste Steckabschnitt (3111), der dritte Steckabschnitt (3121), der vierte Steckabschnitt (3122) und der zweite Steckabschnitt (3112) in Umfangsrichtung angeordnet und jeweils in verschiedene der mehreren Wicklungsnuten (220) eingesteckt sind, wobei der erste Steckabschnitt (3111) mit dem vierten Steckabschnitt (3122) verbunden ist und sich der zweite Verbindungsabschnitt (3123) auf einer dem Stator-Eisenkern (200) zugewandten Seite des ersten Verbindungsabschnitts (3113) befindet,
wobei der erste, der dritte, der vierte und der zweite Steckabschnitt in einer entsprechenden der mehreren Wicklungsnuten jeweils als Flachdrahtleiter dienen und
in jeder der mehreren Wicklungsnuten n Flachdrahtleiterlagen angeordnet sind, wobei n eine positive, gerade Zahl ist, und die n Flachdrahtleiterlagen in einer Richtung, in der eine Unterseite der Wicklungsnut zu einer Öffnung der Wicklungsnut hin gerichtet ist, als Flachdrahtleiterlage L1, ... Flachdrahtleiterlage Li und ... Flachdrahtleiterlage Ln bezeichnet werden, wobei 1 ≤ i ≤ n,
wobei die Statorwicklung mehrere Phasenwicklungen umfasst, wobei jede der mehreren Phasenwicklungen mindestens einen Abzweig und der mindestens eine Abzweig die mehreren Spulenelemente umfasst,
**dadurch gekennzeichnet, dass**
bei dem mindestens einen Abzweig die Flachdrahtleiter von mindestens zwei Spulenelementen der mehreren miteinander verbundenen Spulenelemente in der gleichen Flachdrahtleiterlage angeordnet sind.

2. Stator nach Anspruch 1, wobei die erste Spule (311) ferner einen ersten Verlängerungsabschnitt (3114) und einen zweiten Verlängerungsabschnitt (3115) umfasst, wobei sich der erste Verlängerungsabschnitt (3114) von einem von dem ersten Verbindungsabschnitt (3113) weg weisenden Ende des ersten Steckabschnitts (3111) und der zweite Verlängerungsabschnitt (3115) von einem von dem ersten Verbindungsabschnitt (3113) weg weisenden Ende des zweiten Steckabschnitts (3112) aus erstreckt,
die zweite Spule (312) ferner einen dritten Verlängerungsabschnitt (3124) und einen vierten Verlängerungsabschnitt (3125) umfasst, wobei sich der dritte Verlängerungsabschnitt (3124) von einem von dem zweiten Verbindungsabschnitt (3123) weg weisenden Ende des dritten Steckabschnitts (3121) und der vierte Verlängerungsabschnitt (3125) von einem von dem zweiten Verbindungsabschnitt (3123) weg weisenden Ende des vierten Steckabschnitts (3122) aus erstreckt, und
der erste Verlängerungsabschnitt (3114) in Bezug auf den ersten Steckabschnitt (3111) zum vierten Steckabschnitt (3122) hin gebogen ist, wobei der vierte Verlängerungsabschnitt (3125) in Bezug auf den vierten Steckabschnitt (3122) zum ersten Steckabschnitt (3111) hin gebogen und mit dem ersten Verlängerungsabschnitt (3114) verbunden ist.

3. Stator nach Anspruch 1 oder 2, wobei die Anzahl der mehreren Wicklungsnuten (220) 12·M entspricht, wobei M eine positive Ganzzahl ist, und
ein Abstand zwischen dem ersten Steckabschnitt (3111) und dem zweiten Steckabschnitt (3112) der ersten Spule (311) sieben der mehreren Wicklungsnuten (220) und ein Abstand zwischen dem dritten Steckabschnitt (3121) und dem vierten Steckabschnitt (3122) der zweiten Spule (312) fünf der mehreren Wicklungsnuten (220) entspricht.

4. Stator nach Anspruch 1, wobei bei dem mindestens einen Abzweig die Flachdrahtleiterlagen L₁ der mindestens zwei Spulenelemente (310) verbunden sind und/oder
bei dem mindestens einen Abzweig die Flachdrahtleiterlagen Lₙ der mindestens zwei Spulenelemente (310) verbunden sind.

5. Stator nach einem der Ansprüche 1 bis 4, wobei die Statorwicklung (300) mehrere Phasenwicklungen umfasst, wobei jede der mehreren Phasenwicklungen mindestens einen Abzweig und der mindestens eine Abzweig die mehreren Spulenelemente (310) umfasst, und
jeder des mindestens einen Abzweigs an zwei Enden mit einer ersten beziehungsweise einer zweiten Leitung versehen ist, wobei die erste und die zweite Leitung mit unterschiedlichen Flachdrahtleitern verbunden und der mit der ersten Leitung verbundene Flachdrahtleiter und der mit der zweiten Leitung verbundene Flachdrahtleiter in verschiedenen der mehreren Wicklungsnuten (220) angeordnet sind.

6. Stator nach Anspruch 5, wobei der mit der ersten Leitung verbundene und der mit der zweiten Leitung verbundene Flachdrahtleiter in der gleichen Flachdrahtleiterlage angeordnet sind.

7. Stator nach Anspruch 5 oder 6, wobei jede der mehreren Phasenwicklungen mehrere Abzweige umfasst, wobei es sich bei zwei der mehreren Abzweige um einen ersten und einen zweiten Abzweig handelt, und
ein Abstand zwischen dem mit der ersten Leitung des ersten Abzweigs verbundenen Flachdrahtleiter und dem mit der ersten Leitung des zweiten Abzweigs verbundenen Flachdrahtleiter höchstens einer Polteilung entspricht.

8. Stator nach Anspruch 7, wobei der mit der ersten Leitung des ersten Abzweigs verbundene und der mit der ersten Leitung des zweiten Abzweigs verbundene Flachdrahtleiter in der gleichen Wicklungsnut der mehreren Wicklungsnuten (220) angeordnet sind.

9. Stator nach einem der Ansprüche 5 bis 7, wobei alle ersten Leitungen der mehreren Phasenwicklungen mit den Flachdrahtleitern in den verschiedenen Wicklungsnuten (220) verbunden sind.

10. Stator nach einem der Ansprüche 1 bis 9, wobei die Statorwicklung (300) mehrere Phasenwicklungen umfasst, wobei jede der mehreren Phasenwicklungen mindestens einen Abzweig und der mindestens eine Abzweig die mehreren Spulenelemente (310) umfasst,
jeder des mindestens einen Abzweigs k Flachdrahtleiterlagen umfasst, wobei keine positive Ganzzahl größer 1 ist, und die k Flachdrahtleiterlagen in Stromflussrichtung als Flachdrahtleiterlage A₁, Flachdrahtleiterlage A₂ ... Flachdrahtleiterlage Aₖ₋₁ und Flachdrahtleiterlage Aₖ bezeichnet werden, und
zwei benachbarte Flachdrahtleiter des Abzweigs, die sich in der gleichen Wicklungsnut (220) befinden, jeweils als Flachdrahtleiterlage Aⱼ und Flachdrahtleiterlage A_{y} bezeichnet werden, wobei 1 ≤ j < I ≤ k mit I-j ≤ k/2.

11. Stator nach einem der Ansprüche 1 bis 10, wobei die Statorwicklung (300) mehrere Phasenwicklungen umfasst, wobei jede der mehreren Phasenwicklungen mindestens einen Abzweig und der mindestens eine Abzweig die mehreren Spulenelemente (310) umfasst,
die Phasenwicklung 2P Pol-Phase-Gruppen umfasst, wobei P eine positive Ganzzahl ist, und
die Phasenwicklung mehrere Abzweige umfasst, wobei Spulenelemente (310) mindestens eines der mehreren Abzweige auf alle der 2P Pol-Phase-Gruppen verteilt sind.

12. Stator nach einem der Ansprüche 1 bis 10, wobei die Statorwicklung (300) mehrere Phasenwicklungen umfasst, wobei jede der mehreren Phasenwicklungen mindestens einen Abzweig und der mindestens eine Abzweig die mehreren Spulenelemente (310) umfasst,
die Phasenwicklung 2P Pol-Phase-Gruppen umfasst, wobei P eine positive Ganzzahl ist, und
die Phasenwicklung mehrere Abzweige umfasst, wobei Spulenelemente (310) jedes der mehreren Abzweige auf einige der 2P Pol-Phase-Gruppen verteilt sind.

13. Flachdrahtmotor, der Folgendes umfasst:
einen Rotor und
den Stator (100) nach einem der Ansprüche 1 bis 12,
wobei der Rotor in einem Raum angeordnet ist, der von der Innenwand (210) des Stator-Eisenkerns (200) umschlossen ist.

## Revendications

1. Stator (100) pour moteur à fil plat, le stator (100) comprenant :
un noyau de fer statorique (200) comportant une pluralité d'encoches d'enroulement (220) formées dans une paroi intérieure (210) du noyau de fer statorique (200) ; et
un enroulement statorique (300) fourni au niveau du noyau de fer statorique (200), l'enroulement statorique (300) comprenant une pluralité d'éléments de bobine (310),
dans lequel la pluralité d'encoches d'enroulement (220) est disposée le long d'une direction circonférentielle de la paroi intérieure (210) du noyau de fer statorique (200) ;
dans lequel chacun de la pluralité d'éléments de bobine (310) comprend une première bobine (311) et une seconde bobine (312), la première bobine (311) comprenant une première partie de fiche (3111), une deuxième partie de fiche (3112), et une première partie de connexion (3113) connectant la première partie de fiche (3111) et la deuxième partie de fiche (3112), et la seconde bobine (312) comprenant une troisième partie de fiche (3121), une quatrième partie de fiche (3122), et une seconde partie de connexion (3123) connectant la troisième partie de fiche (3121) et la quatrième partie de fiche (3122) ; et
dans lequel la première partie de fiche (3111), la troisième partie de fiche (3121), la quatrième partie de fiche (3122) et la deuxième partie de fiche (3112) sont agencées le long de la direction circonférentielle et insérées respectivement dans différentes encoches d'enroulement de la pluralité d'encoches d'enroulement (220), la première partie de fiche (3111) étant connectée à la quatrième partie de fiche (3122), et la seconde partie de connexion (3123) étant située sur un côté de la première partie de connexion (3113) face au noyau de fer statorique (200) ;
dans lequel chacune de la première partie de fiche, de la troisième partie de fiche, de la quatrième partie de fiche et de la deuxième partie de fiche servent de conducteur à fil plat dans une encoche correspondante de la pluralité d'encoches d'enroulement ; et
n couches de conducteurs à fil plat sont agencées dans chacune de la pluralité d'encoches d'enroulement, n étant un nombre pair positif, et les n couches de conducteurs à fil plat sont désignées couche de conducteurs à fil plat L1, ... couche de conducteurs à fil plat Li, ... et couche de conducteurs à fil plat Ln dans une direction dans laquelle un fond de l'encoche d'enroulement est dirigé vers une ouverture de l'encoche d'enroulement, où 1 ≤ i ≤ n ;
dans lequel l'enroulement statorique comprend une pluralité d'enroulements de phase, chacun de la pluralité d'enroulements de phase comprenant au moins une branche, et l'au moins une branche comprenant la pluralité d'éléments de bobine ;
**caractérisé en ce que**,
dans au moins une branche, les conducteurs à fil plat d'au moins deux éléments de bobine de la pluralité d'éléments de bobine connectés entre eux sont disposés dans une même couche de conducteurs à fil plat.

2. Stator selon la revendication 1, dans lequel la première bobine (311) comprend en outre une première partie d'extension (3114) et une deuxième partie d'extension (3115), la première partie d'extension (3114) s'étendant depuis une extrémité de la première partie de fiche (3111) à l'écart de la première partie de connexion (3113), et la deuxième partie d'extension (3115) s'étendant à partir d'une extrémité de la deuxième partie de fiche (3112) à l'écart de la première partie de connexion (3113) ;
la seconde bobine (312) comprend en outre une troisième partie d'extension (3124) et une quatrième partie d'extension (3125), la troisième partie d'extension (3124) s'étendant à partir d'une extrémité de la troisième partie de fiche (3121) à l'écart de la seconde partie de connexion (3123), et la quatrième partie d'extension (3125) s'étendant à partir d'une extrémité de la quatrième partie de fiche (3122) à l'écart de la seconde partie de connexion (3123) ; et
la première partie d'extension (3114) est courbée vers la quatrième partie de fiche (3122) par rapport à la première partie de fiche (3111), la quatrième partie d'extension (3125) étant courbée vers la première partie de fiche (3111) par rapport à la quatrième partie de fiche (3122) et connectée à la première partie d'extension (3114).

3. Stator selon la revendication 1 ou 2, dans lequel le nombre de la pluralité d'encoches d'enroulement (220) est 12·M, dans lequel M est un entier positif ; et
une portée entre la première partie de fiche (3111) et la deuxième partie de fiche (3112) de la première bobine (311) est composée de sept encoches d'enroulement de la pluralité d'encoches d'enroulement (220), une portée entre la troisième partie de fiche (3121) et la quatrième partie de fiche (3122) de la seconde bobine (312) est de cinq encoches d'enroulement de la pluralité d'encoches d'enroulement (220).

4. Stator selon la revendication 1, dans lequel dans l'au moins une branche, les couches de conducteurs à fil plat L₁ des au moins deux éléments de bobine (310) sont connectées ; et/ou
dans l'au moins une branche, les couches de conducteurs à fil plat Lₙ des au moins deux éléments de bobine (310) sont connectées.

5. Stator selon l'une quelconque des revendications 1 à 4, dans lequel l'enroulement statorique (300) comprend une pluralité d'enroulements de phase, chacun de la pluralité d'enroulements de phase comprenant au moins une branche, et l'au moins une branche comprenant la pluralité d'éléments de bobine (310) ; et
chacune de l'au moins une branche est pourvue d'une première patte de sortie et d'une seconde patte de sortie respectivement au niveau de deux extrémités de la branche, la première patte de sortie et la seconde patte de sortie étant connectées à différents conducteurs à fil plat, et le conducteur à fil plat connecté à la première patte de sortie et le conducteur à fil plat connecté à la seconde patte de sortie étant agencés dans des encoches d'enroulement différentes de la pluralité d'encoches d'enroulement (220).

6. Stator selon la revendication 5, dans lequel le conducteur à fil plat connecté à la première patte de sortie et le conducteur à fil plat connecté à la seconde patte de sortie sont agencés dans une même couche de conducteurs à fil plat.

7. Stator selon la revendication 5 ou 6, dans lequel chacun de la pluralité d'enroulements de phase comprend une pluralité de branches, deux de la pluralité de branches étant une première branche et une seconde branche ; et
une portée entre le conducteur à fil plat connecté à la première patte de sortie de la première branche et le conducteur à fil plat connecté à la première patte de sortie de la seconde branche est inférieure ou égale à un pas de pôle.

8. Stator selon la revendication 7, dans lequel le conducteur à fil plat connecté à la première patte de sortie de la première branche et le conducteur à fil plat connecté à la première patte de sortie de la seconde branche sont agencés dans la même encoche d'enroulement de la pluralité d'encoches d'enroulement (220).

9. Stator selon l'une quelconque des revendications 5 à 7, dans lequel toutes les premières pattes de sortie de la pluralité d'enroulements de phase sont connectées aux conducteurs à fil plat dans les différentes encoches d'enroulement (220).

10. Stator selon l'une quelconque des revendications 1 à 9, dans lequel l'enroulement statorique (300) comprend une pluralité d'enroulements de phase, chacun de la pluralité d'enroulements de phase comprenant au moins une branche, et l'au moins une branche comprenant la pluralité d'éléments de bobine (310) ;
chacune de l'au moins une branche comprend k couches de conducteurs à fil plat, k étant un entier positif supérieur à 1, et les k couches de conducteurs à fil plat étant désignées couche de conducteurs à fil plat A₁, couche de conducteurs à fil plat A₂, couche de conducteur à fil plat Aₖ₋₁, et couche de conducteurs à fil plat Aₖ dans une direction de passage du courant ; et
deux conducteurs à fil plat adjacents de la branche situés dans la même encoche d'enroulement (220) sont respectivement désignés couche de conducteurs à fil plat Aⱼ et couche de conducteurs à fil plat A₁, 1 ≤ j < 1 ≤ k, où I-j ≤ k/2.

11. Stator selon l'une quelconque des revendications 1 à 10, dans lequel l'enroulement statorique (300) comprend une pluralité d'enroulements de phase, chacun de la pluralité d'enroulements de phase comprenant au moins une branche, et l'au moins une branche comprenant la pluralité des éléments de bobine (310) ;
l'enroulement de phase comprend 2P groupes pôles-phase, P étant un entier positif ; et
l'enroulement de phase comprend une pluralité de branches, des éléments de bobine (310) d'au moins une de la pluralité de branches étant répartis dans tous les 2P groupes pôle-phase.

12. Stator selon l'une quelconque des revendications 1 à 10, dans lequel l'enroulement statorique (300) comprend une pluralité d'enroulements de phase, chacun de la pluralité d'enroulements de phase comprenant au moins une branche, et l'au moins une branche comprenant la pluralité d'éléments de bobine (310) ;
l'enroulement de phase comprend 2P groupes pôle-phase, P étant un entier positif ; et
l'enroulement de phase comprend une pluralité de branches, les éléments de bobine (310) de chacune de la pluralité de branches étant répartis dans certains des 2P groupes pôle-phase.

13. Moteur à fil plat, comprenant :
un rotor ; et
le stator (100) selon l'une quelconque des revendications 1 à 12,
dans lequel le rotor est disposé dans un espace entouré par la paroi intérieure (210) du noyau de fer statorique (200).
